(19) Europäisches Patentamt
European Patent Office
Office européen des brevets

(11) EP 4 679 728 A1

(12) EUROPEAN PATENT APPLICATION
published in accordance with Art. 153(4) EPC

(43) Date of publication:
14.01.2026 Bulletin 2026/03

(21) Application number: 24784398.0

(22) Date of filing: 03.04.2024

(51) International Patent Classification (IPC):
*H04B 7/06* (2006.01)

(52) Cooperative Patent Classification (CPC):
H04B 7/06; H04L 1/06

(86) International application number:
PCT/CN2024/085986

(87) International publication number:
WO 2024/208316 (10.10.2024 Gazette 2024/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.04.2023 CN 202310377819

(71) Applicant: HUAWEI TECHNOLOGIES CO., LTD.
Shenzhen 518129 (CN)

(72) Inventors:
• CHEN, Jiaxuan
  Shenzhen, Guangdong 518129 (CN)
• CHAI, Xiaomeng
  Shenzhen, Guangdong 518129 (CN)
• SUN, Yan
  Shenzhen, Guangdong 518129 (CN)
• LI, Yuan
  Shenzhen, Guangdong 518129 (CN)

(74) Representative: Maiwald GmbH
Engineering
Elisenhof
Elisenstrasse 3
80335 München (DE)

(54) **COMPRESSION INFORMATION FEEDBACK METHOD, AND APPARATUS**

(57) A compressed information feedback method and an apparatus are provided. The method includes: A first communication apparatus determines L pieces of compressed information, where the compressed information is compressed information of a downlink channel; and the first communication apparatus sends the L pieces of compressed information and first indication information to a second communication apparatus, where the first indication information includes first information. According to the foregoing design, the first communication apparatus feeds back the first information to the second communication apparatus, where the first information may indicate one combination in at least one combination, and the at least one combination is determined based on a quantity L of the pieces of compressed information and/or a sum B of lengths of the L pieces of compressed information, to limit a possible value of the at least one combination, thereby reducing overheads of bits occupied by the first information. Compared with a manner of independently indicating the lengths of the L pieces of compressed information, this design can reduce information feedback overheads.

FIG. 7

**Description**

<u>CROSS-REFERENCE TO RELATED APPLICATIONS</u>

This application claims priority to Chinese Patent Application No. 202310377819.9, filed with the China National Intellectual Property Administration on April 6, 2023 and entitled "COMPRESSED INFORMATION FEEDBACK METHOD AND APPARATUS", which is incorporated herein by reference in its entirety.

<u>TECHNICAL FIELD</u>

Embodiments of this application relate to the field of communication technologies, and in particular, to a compressed information feedback method and an apparatus.

<u>BACKGROUND</u>

In communication systems such as long term evolution (long term evolution, LTE) and new radio (new radio, NR), an access network device needs to obtain downlink channel state information (channel state information, CSI), to determine configurations such as a resource, a modulation and coding scheme (modulation and coding scheme, MCS), and precoding for a downlink data channel scheduled by a terminal. In a design, the terminal may feed back compressed information of downlink channel information to the access network device, and the access network device may restore the measured downlink channel information based on the compressed information, and determine a specific configuration of a downlink signal. Based on this, how the terminal feeds back the compressed information of the downlink channel to the access network device is a problem worth studying.

<u>SUMMARY</u>

Embodiments of this application provide a compressed information feedback method and an apparatus, to feed back compressed information.

According to a first aspect, a compressed information feedback method is provided, including: A first communication apparatus determines L pieces of compressed information, where the compressed information is compressed information of a downlink channel, and L is an integer greater than or equal to 1; and the first communication apparatus sends the L pieces of compressed information and first indication information to a second communication apparatus, where the first indication information includes first information, the first information indicates one combination in at least one combination, the one combination in the at least one combination includes L compressed information lengths corresponding to the L pieces of compressed information, the at least one combination is determined based on a quantity L of the pieces of compressed information and/or a sum B of the lengths of the L pieces of compressed information, and B is an integer greater than 0. Optionally, the first communication apparatus is a terminal, or a chip, a circuit, or the like used in a terminal, and the second communication apparatus is an access network device, or a chip or a circuit used in an access network device.

According to the foregoing design, the first communication apparatus feeds back the first information to the second communication apparatus, where the first information may indicate the one combination in the at least one combination, and the at least one combination is determined based on L and/or B, to limit a possible value of the at least one combination, thereby reducing overheads of bits occupied by the first information. Compared with a manner of independently indicating the lengths of the L pieces of compressed information, this design can reduce information feedback overheads. For example, in a design, when the L pieces of compressed information are independently indicated, a quantity of bits occupied by the first information is less than a sum of quantities of bits occupied by the L compressed information lengths in a case in which the L compressed information lengths are separately indicated. Optionally, when the lengths of the L pieces of compressed information are separately indicated, a quantity of bits occupied by each of the L compressed information lengths is determined based on a possible value of each compressed information length.

In a design, a generation rule of an identifier of the at least one combination is predefined, is notified by the first communication apparatus to the second communication apparatus, or is notified by the second communication apparatus to the first communication apparatus.

In a design, a quantity of the at least one combination is less than or equal to a quantity of all combinations that are of the L compressed information lengths and that meet the sum B of the lengths of the L pieces of compressed information.

According to the foregoing design, when the quantity of the at least one combination is less than the quantity of all the combinations that are of the L compressed information lengths and that meet B, overheads of indicating one combination by the first information can be further reduced.

In a design, the at least one combination is predefined; or the first communication apparatus receives second indication information from the second communication apparatus, and the second indication information indicates the at least one combination. For example, one compressed information length included in the one combination in the at least one combination has N possible values, the one compressed information length is represented by $\lceil log_2(N) \rceil$ bits, and the second indication information includes at least a bit corresponding to at least one compressed information length included in the one combination in the at least one combination, where N is an integer greater than 0; or for the one combination in the at least one combination, the second indication information includes indication information of at least one of the following: a quantity of compressed information lengths included in the one combination, a sum of compressed information lengths corresponding to the one combination, or at least one compressed information length corresponding to the one combination.

In a design, the quantity L of the pieces of compressed information is predefined; or the first indication information further includes second information, and the second information indicates the quantity L of the pieces of compressed information; and the sum B of the lengths of the L pieces of compressed information is predefined; or the first indication information further includes third information, and the third information indicates the sum B of the lengths of the L pieces of compressed information.

In a design, the method further includes: The first communication apparatus determines M pieces of compressed information; and the first communication apparatus sends the M pieces of compressed information and third indication information to the second communication apparatus, where the third indication information includes fourth information, the fourth information indicates M compressed information lengths corresponding to the M pieces of compressed information, and M is an integer greater than or equal to 1.

In a design, the method further includes: The first communication apparatus sends fourth indication information to the second communication apparatus, where the fourth indication information indicates an encoder corresponding to first compressed information in the L pieces of compressed information. For example, the fourth indication information includes an identifier of the encoder corresponding to the first compressed information. Optionally, a length of the first compressed information is a first length, and the identifier of the encoder corresponding to the first compressed information is determined based on a quantity of encoders corresponding to the first length.

According to the foregoing design, the identifier of the encoder is determined based on the quantity of encoders corresponding to the first length, and compared with a solution in which the fourth indication information includes a global identifier of the encoder, a solution in which the fourth indication information includes the identifier of the encoder can reduce indication overheads of the identifier of the encoder.

According to a second aspect, a compressed information feedback method is provided. The second aspect is a peer method of the first aspect. For beneficial effect, refer to descriptions of the first aspect. The method includes: A second communication apparatus receives a compressed information set and first indication information from a first communication apparatus; the second communication apparatus determines at least one combination based on a quantity L of pieces of compressed information and/or a sum B of lengths of the L pieces of compressed information, where one combination in the at least one combination includes L compressed information lengths corresponding to the L pieces of compressed information, L is an integer greater than or equal to 1, and B is an integer greater than 0; and the second communication apparatus determines, based on the one combination in the at least one combination indicated by the first indication information, the L compressed information lengths corresponding to the L pieces of compressed information included in the compressed information set.

In a design, the first indication information includes first information, and the first information indicates the one combination in the at least one combination. Optionally, a quantity of bits occupied by the first information is less than a sum of quantities of bits occupied by the L compressed information lengths in a case in which the L compressed information lengths are separately indicated.

In a design, when the lengths of the L pieces of compressed information are separately indicated, a quantity of bits occupied by one compressed information length in the L compressed information lengths is determined based on a possible value of the one compressed information length.

In a design, a generation rule of an identifier of the at least one combination is predefined, is notified by the first communication apparatus to the second communication apparatus, or is notified by the second communication apparatus to the first communication apparatus.

In a design, a quantity of the at least one combination is less than or equal to a quantity of all combinations that are of the lengths of the L pieces of compressed information and that meet the sum B of the lengths of the L pieces of compressed information.

In a design, the at least one combination is predefined; or the second communication apparatus sends second indication information to the first communication apparatus, and the second indication information indicates the at least one combination.

In a design, one compressed information length included in the one combination in the at least one combination has N possible values, the one compressed information length is represented by $\lceil log_2(N) \rceil$ bits, and the second indication information includes at least a bit corresponding to at least one compressed information length included in the one combination in the at least one combination, where N is an integer greater than 0; or for the one combination in the at least one combination, the second indication information includes indication information of at least one compressed information length corresponding to the one combination. Optionally, the second indication information further includes indication information of at least one of the following: a quantity of compressed information lengths included in the one combination, or a sum of compressed information lengths corresponding to the one combination.

In a design, the quantity L of the pieces of compressed information is predefined; or the first indication information further includes second information, and the second information indicates the quantity L of the pieces of compressed information; and the sum B of the lengths of the L pieces of compressed information is predefined; or the first indication information further includes third information, and the third information indicates the sum B of the lengths of the L pieces of compressed information.

In a design, the method further includes: The second communication apparatus receives M pieces of compressed information and third indication information that are from the first communication apparatus, where the third indication information includes fourth information, the fourth information indicates M compressed information lengths corresponding to the M pieces of compressed information, and M is an integer greater than or equal to 1.

In a design, the method further includes: The second communication apparatus receives fourth indication information from the first communication apparatus, where the fourth indication information indicates an encoder corresponding to first compressed information in the L pieces of compressed information.

In a design, the fourth indication information includes an identifier of the encoder corresponding to the first compressed information.

In a design, a length of the first compressed information is a first length, and the identifier of the encoder corresponding to the first compressed information is determined based on a quantity of encoders corresponding to the first length.

According to a third aspect, a compressed information feedback method is provided, including: A first communication apparatus determines L pieces of compressed information, where the compressed information is compressed information of a downlink channel, and L is an integer greater than or equal to 1; and the first communication apparatus sends the L pieces of compressed information and fifth indication information to a second communication apparatus, where the fifth indication information indicates M compressed information lengths corresponding to M pieces of compressed information in the L pieces of compressed information, and M is an integer less than L. Optionally, the first communication apparatus is a terminal, or a chip, a circuit, or the like used in a terminal, and the second communication apparatus is an access network device, or a chip or a circuit used in an access network device.

According to the foregoing design, the first terminal apparatus feeds back the M compressed information lengths to the second terminal apparatus, and a manner of determining lengths of remaining L-M pieces of compressed information is not limited. For example, the manner of determining the lengths of the remaining L-M pieces of compressed information is predefined, and the L-M pieces of compressed information are evenly divided, so that feedback overheads can be reduced.

In a design, the fifth indication information includes M information elements, and the M compressed information lengths are carried in the M information elements; or the fifth indication information includes one information element, the M compressed information lengths are carried in the one information element, and lengths of the M pieces of compressed information are the same; or the fifth indication information includes fifth information, the fifth information indicates one combination in at least one combination, and the one combination in the at least one combination includes the M compressed information lengths corresponding to the M pieces of compressed information.

According to the foregoing design, if the fifth indication information includes the one information element, and the M compressed information lengths are the same, the information element carries one compressed information length. In this case, the first communication apparatus needs to indicate only one length for the M pieces of compressed information, so that information feedback overheads can be reduced.

In a design, a generation rule of an identifier of the at least one combination is predefined, is notified by the first communication apparatus to the second communication apparatus, or is notified by the second communication apparatus to the first communication apparatus.

In a design, the at least one combination is predefined; or the first communication apparatus receives sixth indication information from the second communication apparatus, and the sixth indication information indicates the at least one combination.

In a design, the fifth indication information further includes sixth information, and the sixth information indicates a manner of determining the L-M compressed information lengths; or a manner of determining the L-M compressed information lengths is predefined. For example, the lengths of the L-M pieces of compressed information are the same.

In a design, a value of M is predefined; or the fifth indication information further includes seventh information, and the seventh information indicates a value of M.

In a design, the quantity L of the pieces of compressed information is predefined; or the fifth indication information further includes eighth information, and the eighth information indicates the quantity L of the pieces of compressed information; and a sum B of lengths of the L pieces of compressed information is predefined; or the fifth indication information further includes ninth information, and the ninth information indicates a sum B of lengths of the L pieces of compressed information.

In a design, the method further includes: The first communication apparatus sends seventh indication information to the second communication apparatus, where the seventh indication information indicates an encoder corresponding to first compressed information in the L pieces of compressed information. For example, the seventh indication information includes an identifier of the encoder corresponding to the first compressed information. Optionally, a length of the first compressed information is a first length, and the identifier of the encoder corresponding to the first compressed information is determined based on a quantity of encoders corresponding to the first length.

According to the foregoing design, the identifier of the encoder is determined based on the quantity of encoders corresponding to the first length, and compared with a solution in which the fourth indication information includes a global identifier of the encoder, a solution in which the fourth indication information includes the identifier of the encoder can reduce indication overheads of the identifier of the encoder.

According to a fourth aspect, a compressed information feedback method is provided. The fourth aspect is a peer method of the third aspect. For beneficial effect, refer to descriptions of the third aspect. The method includes: A second communication apparatus receives a compressed information set and fifth indication information that are from a first communication apparatus, where the fifth indication information indicates M compressed information lengths corresponding to M pieces of compressed information, M is an integer less than L, and L is an integer greater than or equal to 1; and the second communication apparatus determines, based on the M compressed information lengths indicated by the fifth indication information, lengths of the M pieces of compressed information included in the compressed information set.

In a design, the fifth indication information includes M information elements, and the M compressed information lengths are carried in the M information elements; or the fifth indication information includes one information element, the M compressed information lengths are carried in the one information element, and the lengths of the M pieces of compressed information are the same; or the fifth indication information includes fifth information, the fifth information indicates one combination in at least one combination, and the one combination in the at least one combination includes the M compressed information lengths corresponding to the M pieces of compressed information.

In a design, a generation rule of an identifier of the at least one combination is predefined, is notified by the first communication apparatus to the second communication apparatus, or is notified by the second communication apparatus to the first communication apparatus.

In a design, the at least one combination is predefined; or the second communication apparatus sends sixth indication information to the first communication apparatus, and the sixth indication information indicates the at least one combination.

In a design, the method further includes: determining lengths of L-M pieces of compressed information in the compressed information set.

A manner of determining the lengths of the L-M pieces of compressed information is predefined; or the fifth indication information further includes sixth information, and the sixth information indicates a manner of determining the lengths of the L-M pieces of compressed information.

In a design, the lengths of the L-M pieces of compressed information are the same.

In a design, a value of M is predefined; or the fifth indication information further includes seventh information, and the seventh information indicates a value of M.

In a design, a quantity L of pieces of compressed information is predefined; or the fifth indication information further includes eighth information, and the eighth information indicates a quantity L of pieces of compressed information; and a sum B of lengths of the L pieces of compressed information is predefined; or the fifth indication information further includes ninth information, and the ninth information indicates a sum B of lengths of the L pieces of compressed information.

In a design, the method further includes: The first communication apparatus sends seventh indication information to the second communication apparatus, where the seventh indication information indicates an encoder corresponding to first compressed information in the L pieces of compressed information.

In a design, the seventh indication information includes an identifier of the encoder corresponding to the first compressed information.

In a design, a length of the first compressed information is a first length, and the identifier of the encoder corresponding to the first compressed information is determined based on a quantity of encoders corresponding to the first length.

According to a fifth aspect, an apparatus is provided. The apparatus includes a corresponding unit or module for performing the method in any one of the first aspect to the fourth aspect. The unit or module may be implemented by a hardware circuit, software, or a combination of a hardware circuit and software.

According to a sixth aspect, an apparatus is provided, including a processor and an interface circuit. The processor is configured to: communicate with another apparatus through the interface circuit, and perform the method in any one of the first aspect to the fourth aspect. There are one or more processors.

According to a seventh aspect, an apparatus is provided, including a processor coupled to a memory. The processor is configured to execute a program stored in the memory, to perform the method in any one of the first aspect to the fourth aspect. The memory may be located inside or outside the apparatus. In addition, there may be one or more processors.

According to an eighth aspect, an apparatus is provided, including a processor and a memory. The memory is configured to store computer instructions. When the apparatus runs, the processor executes the computer instructions stored in the memory, to enable the apparatus to perform the method in any one of the first aspect to the fourth aspect.

According to a ninth aspect, a chip system is provided, including a processor or a circuit, configured to perform the method in any one of the first aspect to the fourth aspect.

According to a tenth aspect, a computer-readable storage medium is provided. The computer-readable storage medium stores instructions. When the instructions are run on a communication apparatus, the method in any one of the first aspect to the fourth aspect is performed.

According to an eleventh aspect, a computer program product is provided. The computer program product includes a computer program or instructions. When the computer program or the instructions are run by an apparatus, the method in any one of the first aspect to the fourth aspect is performed.

According to a twelfth aspect, a system is provided, including a first communication apparatus that performs the method in the first aspect and a second communication apparatus that performs the method in the second aspect. Alternatively, the communication apparatus includes a first communication apparatus that performs the method in the third aspect and a second communication apparatus that performs the method in the fourth aspect.

BRIEF DESCRIPTION OF DRAWINGS

FIG. 1 is a diagram of an architecture of a communication system according to an embodiment of this application;
FIG. 2 is a diagram of an O-RAN architecture according to an embodiment of this application;
FIG. 3 is another diagram of an O-RAN architecture according to an embodiment of this application;
FIG. 4 is a diagram of an architecture of an AI model application according to an embodiment of this application;
FIG. 5 is a diagram of a neuron according to an embodiment of this application;
FIG. 6 is a diagram of a layer structure of a neuron according to an embodiment of this application;
FIG. 7 is a flowchart of compressed information feedback according to an embodiment of this application;
FIG. 8 is a diagram of an encoder and a decoder according to an embodiment of this application;
FIG. 9 is another flowchart of compressed information feedback according to an embodiment of this application; and
FIG. 10 and FIG. 11 each are a diagram of a structure of an apparatus according to an embodiment of this application.

DESCRIPTION OF EMBODIMENTS

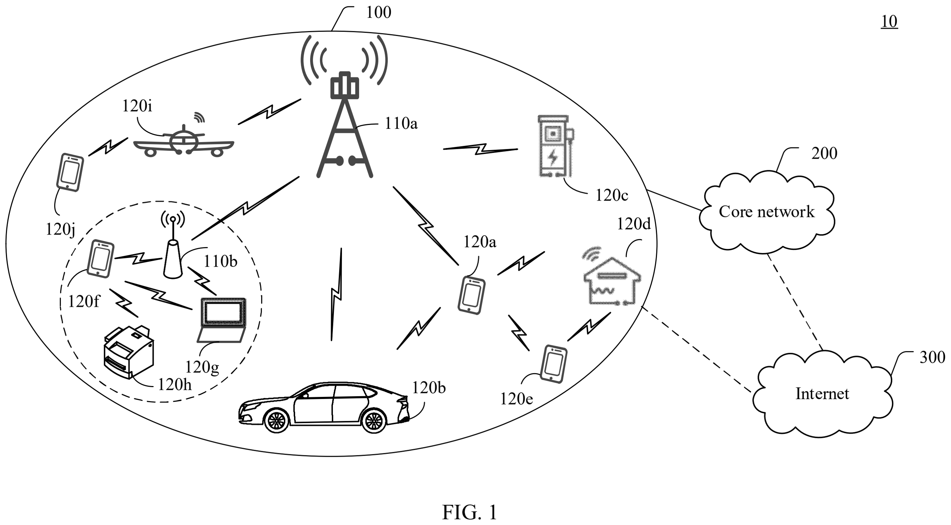

FIG. 1 is a diagram of an architecture of a communication system 10 to which this application is applicable. As shown in FIG. 1, the communication system 10 includes a radio access network 100 and a core network 200. Optionally, the communication system 10 may further include an internet 300.

The radio access network 100 may include at least one access network device (for example, 110a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or some functions of the core network device and some functions of the access network device may be integrated into one physical device. Terminals may be connected to each other in a wired or wireless manner, and access network devices may be connected to each other in a wired or wireless manner. FIG. 1 is merely a diagram. The communication system 10 may further include other network devices, for example, a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes some functions of a base station, for example, a central unit (central unit, CU), a distributed unit (distributed unit, DU), a radio unit (radio unit, RU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. Alternatively, the access network device may be a communication module, a modem, or a chip disposed in the foregoing device or apparatus. Alternatively, the access network device may be a mobile switching center, a device that performs functions of a base station in D2D, V2X, and M2M communication, a network side device in a 6G network, a device that performs functions of a base station in a future communication system, or the like. The base station may support networks using a same access technology or different access technologies. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). A specific technology and a specific device form that are used by the access network device are not limited in this application.

In some deployments, the access network device mentioned in embodiments of this application may be a device including a CU, a DU, or a CU and a DU, or a device including a CU control plane (central unit-control plane (central unit-control plane, CU-CP)) node, a CU user plane (central unit-user plane (central unit-user plane, CU-UP)) node, and a DU node. For example, the access network device may include a gNB-CU-CP, a gNB-CU-UP, and a gNB-DU.

In some deployments, a plurality of access network devices cooperate to assist a terminal in implementing wireless access, and different access network devices separately implement some functions of a base station. For example, the access network device may be a CU, a DU, a CU-CP, a CU-UP, an RU, or the like. The CU and the DU may be separately disposed, or may be included in a same network element, for example, a BBU. The RU may be included in a radio frequency device or a radio frequency unit, for example, included in an RRU, an AAU, or an RRH.

The access network device may support one or more types of fronthaul interfaces, and different fronthaul interfaces correspond to DUs and RUs that have different functions. If a fronthaul interface between a DU and an RU is a common public radio interface (common public radio interface, CPRI), the DU is configured to implement one or more baseband functions, and the RU is configured to implement one or more radio frequency functions. If a fronthaul interface between a DU and an RU is an enhanced common public radio interface (enhanced common public radio interface, eCPRI), compared to the CPRI, some downlink and/or uplink baseband functions are moved from the DU to the RU for implementation. Different dividing manners of the DU and the RU correspond to different categories (category, Cat) of eCPRIs, for example, eCPRI Cats A, B, C, D, E, and F.

eCPRI Cat A is used as an example. For downlink transmission, layer mapping is used as a dividing point. The DU is configured to implement layer mapping and one or more functions before layer mapping (that is, one or more of encoding, rate matching, scrambling, modulation, and layer mapping), and other functions after layer mapping (for example, one or more of RE mapping, digital beamforming (beamforming, BF), or inverse fast Fourier transform (inverse fast Fourier transform, IFFT)/adding a cyclic prefix (cyclic prefix, CP)) are implemented in the RU. For uplink transmission, RE de-mapping is used as a dividing point. The DU is configured to implement de-mapping and one or more functions before de-mapping (that is, one or more functions of decoding, rate de-matching, descrambling, demodulation, inverse discrete Fourier transform (inverse discrete Fourier transform, IDFT), channel equalization, and RE de-mapping), and other functions after de-mapping (for example, one or more of digital BF or fast Fourier transform (fast Fourier transform, FFT)/removing a CP) are implemented in the RU. It may be understood that, for function descriptions of DUs and RUs that correspond to various categories of eCPRIs, refer to the eCPRI protocol. Details are not described herein.

In a possible design, a processing unit that is in a BBU and that is configured to implement a baseband function is referred to as a baseband high (base band high, BBH) unit, and a processing unit that is in an RRU/AAU/RRH and that is configured to implement a baseband function is referred to as a baseband low (base band low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

The access network device and/or the terminal device may be deployed on land, including being deployed indoor or outdoor, handheld, or vehicle-mounted; may be deployed on the water; or may be deployed on an airplane, a balloon, and a satellite in the air. Scenarios in which the access network device and the terminal device are located are not limited in embodiments of this application. In addition, the terminal device and the access network device may be hardware devices, or may be software functions running on dedicated hardware, or software functions running on general-purpose hardware, for example, virtualization functions instantiated on a platform (for example, a cloud platform), or may be entities including a dedicated or general-purpose hardware device and a software function. Specific forms of the terminal device and the access network device are not limited in this application.

In this application, an apparatus configured to implement functions of an access network device may be an access network device, or may be an apparatus that can support an access network device in implementing the functions, for example, a chip system, a hardware circuit, a software module, or a combination of a hardware circuit and a software module. The apparatus may be installed in the access network device, or may be used together with the access network device. In this application, the chip system may include a chip, or may include a chip and another discrete component. For ease of description, the following describes the technical solutions provided in this application by using an example in which an apparatus configured to implement the functions of an access network device is an access network device.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.
Optionally, the protocol layer structure between the access network device and the terminal may further include an artificial intelligence (artificial intelligence, AI) layer, used to transmit data related to an AI function.

(2) Central unit (central unit, CU) and distributed unit (distributed unit, DU)

An access network device may include a CU and a DU. A plurality of DUs may be centrally controlled by one CU. For example, an interface between the CU and the DU may be referred to as an F1 interface. A control plane (control panel, CP) interface may be F1-C, and a user plane (user panel, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of a protocol layer below the PDCP layer (for example, an RLC layer and a MAC layer) are set on the DU. For another example, functions of a protocol layer above the PDCP layer are set on the CU, and functions of the PDCP layer and a protocol layer below the PDCP layer are set on the DU. This is not limited.
The foregoing division of processing functions of the CU and the DU based on the protocol layers is merely an example, and may alternatively be performed in another manner. For example, the CU or the DU may have functions of more protocol layers through division. For another example, the CU or the DU may have some processing functions of protocol layers through division. In a design, some functions of an RLC layer and functions of a protocol layer above the RLC layer are set on the CU, and remaining functions of the RLC layer and functions of a protocol layer below the RLC layer are set on the DU. In another design, functions of the CU or the DU may alternatively be divided based on a service type or another system requirement, for example, may be divided based on a delay. A function whose processing time needs to meet a delay requirement is set on the DU, and a function whose processing time does not need to meet the delay requirement is set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.
Optionally, the DU and the RU may be divided at a physical layer (physical layer, PHY). For example, the DU may implement a higher-layer function of the PHY layer, and the RU may implement a lower-layer function of the PHY layer. When the PHY layer is used for sending, a function of the PHY layer may include one or more of the following: adding a cyclic redundancy check (cyclic redundancy check, CRC) code, channel encoding, rate matching, scrambling, modulation, layer mapping, precoding, resource mapping, physical antenna mapping, or a radio frequency sending function. When the PHY layer is used for receiving, a function of the PHY layer may include one or more of the following: CRC check, channel decoding, rate de-matching, descrambling, demodulation, layer de-mapping, channel detection, resource de-mapping, physical antenna de-mapping, or a radio frequency receiving function. The higher-layer function of the PHY layer may include some functions of the PHY layer, for example, the some functions are closer to the MAC layer. The lower-layer function of the PHY layer may include some other functions of the PHY layer, for example, the some functions are closer to a radio frequency function. For example, the higher-layer function of the PHY layer may include adding a CRC code, channel encoding, rate matching, scrambling, modulation, and layer mapping, and the lower-layer function of the PHY layer may include precoding, resource mapping, physical antenna mapping, and the radio frequency sending function. Alternatively, the higher-layer function of the PHY layer may include adding a CRC code, channel encoding, rate matching, scrambling, modulation, layer mapping, and precoding, and the lower-layer function of the PHY layer may include resource mapping, physical antenna mapping, and the radio frequency sending function. For example, the higher-layer function of the PHY layer may include CRC check, channel decoding, rate de-matching, decoding, demodulation, and layer de-mapping, and the lower-layer function of the PHY layer may include channel detection, resource de-mapping, physical antenna de-mapping, and the radio frequency receiving function. Alternatively, the higher-layer function of the PHY layer may include CRC check, channel decoding, rate de-matching, decoding, demodulation, layer de-mapping, and channel detection, and the lower-layer function of the PHY layer may include resource de-mapping, physical antenna de-mapping, and the radio frequency receiving function.

For example, functions of the CU may be implemented by one entity or different entities. For example, the functions of the CU may be further divided. To be specific, a control plane and a user plane are separated and implemented by different entities, which are respectively a CU control plane entity (namely, a CU-CP entity) and a CU user plane entity (namely, a CU-UP entity). The CU-CP entity and the CU-UP entity may be coupled to the DU, to jointly complete functions of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In a possible implementation, the access network device includes one or a combination of a CU-CP, a CU-UP, a DU, or an RU. For example, this application is performed by the DU, or the RU, or the DU and the RU, or the CU-CP, the DU, and the RU, or the CU-UP, the DU, and the RU. This is not limited. The methods performed by the modules also fall within the protection scope of this application.

The terminal may also be referred to as a terminal device, user equipment (user equipment, UE), a mobile station, a mobile terminal, or the like. The terminal may be widely used in communication in various scenarios, for example, including but not limited to one or more of the following scenarios: device-to-device (device-to-device, D2D), vehicle to everything (vehicle to everything, V2X), machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, or a smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in this application.

In this application, an apparatus configured to implement functions of a terminal may be a terminal, or may be an apparatus that can support a terminal in implementing the functions, for example, a chip system, a hardware circuit, a software module, or a combination of a hardware circuit and a software module. The apparatus may be installed in the terminal or may be used together with the terminal. For ease of description, the following describes technical solutions provided in this application by using an example in which an apparatus configured to implement functions of a terminal is a terminal.

The access network device and the terminal may be at fixed locations, or may be mobile. The access network device and/or the terminal may be deployed on land, including being deployed indoor or outdoor, handheld, or vehicle-mounted; may be deployed on the water; or may be deployed on an airplane, a balloon, and an artificial satellite in the air. Application scenarios of the access network device and the terminal are not limited in this application. The access network device and the terminal may be deployed in a same scenario or different scenarios. For example, both the access network device and the terminal are deployed on the land; or the access network device is deployed on the land, and the terminal is deployed on the water. Examples are not enumerated.

Roles of the access network device and the terminal may be relative. For example, a helicopter or an uncrewed aerial vehicle 120i in FIG. 1 may be configured as a mobile access network device. For a terminal 120j that accesses a radio access network 100 through 120i, the terminal 120i is an access network device. However, for an access network device 110a, 120i is a terminal, that is, 110a and 120i communicate with each other through a radio air interface protocol. Alternatively, 110a and 120i may communicate with each other through an interface protocol between access network devices. In this case, for 110a, 120i is also an access network device. Therefore, both the access network device and the terminal may be collectively referred to as communication apparatuses. 110a and 110b in FIG. 1 may be referred to as communication apparatuses having a function of the access network device, and 120a to 120j in FIG. 1 may be referred to as communication apparatuses having a function of the terminal.

Communication between an access network device and a terminal, between access network devices, or between terminals may be performed through a licensed spectrum, an unlicensed spectrum, or both a licensed spectrum and an unlicensed spectrum; and communication may be performed through a spectrum below 6 gigahertz (gigahertz, GHz), a spectrum above 6 GHz, or both a spectrum below 6 GHz and a spectrum above 6 GHz. A spectrum resource for wireless communication is not limited in this application.

It may be understood that, in embodiments of this application, all or some functions implemented by the terminal and/or the access network device may be virtualized, for example, implemented by using a dedicated processor, or a processor and a corresponding software module. Because the terminal and the access network device are related to an air interface transmission interface, receiving and sending functions of the interface may be implemented by hardware. Optionally, one or more functions of the virtualized terminal and/or the virtualized access network device may be implemented by a cloud device, for example, a cloud device in an over the top (over the top, OTT) system.

Optionally, in embodiments of this application, to support a machine learning function in a wireless network, an independent network element (for example, referred to as an AI network element or an AI node) may be introduced into the communication system shown in FIG. 1 to implement an AI-related operation. The AI network element or the AI node may be directly connected to the access network device in the communication system, or may be indirectly connected to the access network device through a third-party network element. This is not limited. The third-party network element may be a core network element such as an access and mobility management function (access and mobility management function, AMF) or a user plane function (user plane function, UPF). For example, the AI network element or the AI node may collect, through the terminal and/or the access network device, related information of a downlink channel, for example, downlink channel information measured by the terminal, compressed information that is of the downlink channel and that is fed back by the terminal to the access network device, and downlink channel information restored by the access network device. The foregoing information may be used as training data, to train an encoder and a decoder. The encoder is deployed on a terminal side, and is configured to compress the downlink channel information. The decoder is deployed on an access network device side, and is configured to decode and/or restore the compressed downlink channel information. Alternatively, an AI function, an AI module, or an AI entity may be configured in a network element in the communication system shown in FIG. 1 to implement an AI-related operation. The network element may be the terminal, the access network device, or the like. For example, the terminal or the access network device trains the encoder, the decoder, and the like, the terminal compresses the downlink channel information by using the encoder, and the access network device decodes and/or restores the compressed downlink channel information by using the decoder. In this case, a network element that performs the AI-related operation may be referred to as a network element with a built-in AI function. The AI network element may be located in a host or a cloud server of the OTT system.

In embodiments of this application, the access network device may use an O-RAN architecture. The following describes an example of the O-RAN architecture. This is not intended to limit embodiments of this application.

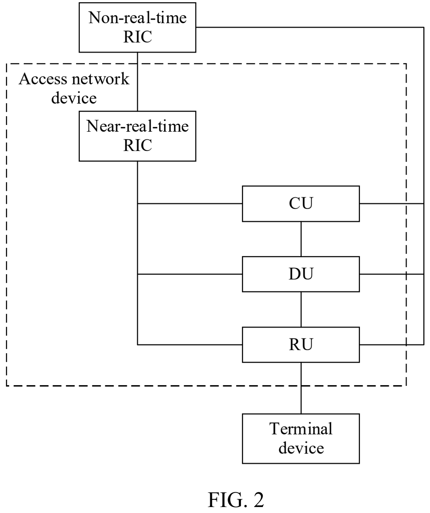

In a first design, refer to FIG. 2. The access network device includes a near-real-time access network intelligent controller (RAN intelligent controller, RIC), a CU, a DU, an RU, and the like. The near-real-time RIC is configured to perform model training and inference. For example, the near-real-time RIC may train an AI model, and use the AI model for inference. For example, the near-real-time RIC may obtain information on a network side or a terminal side from one or more of the CU, the DU, the RU, or the terminal, where the information may be used as training data or inference data. For example, the foregoing information may be used as the training data, and the near-real-time RIC may train an AI model based on the collected training data. Alternatively, the foregoing information may be used as the inference data, and the near-real-time RIC may perform model inference based on the collected inference data and an AI model, to determine an inference result. Optionally, the near-real-time RIC may send the inference result to one or more of the CU, the DU, the RU, the terminal, or the like. Optionally, the CU and the DU may exchange the inference result. For example, the near-real-time RIC sends the inference result to the CU, and the CU forwards the inference result to the DU. Optionally, the DU and the RU may exchange the inference result. For example, the near-real-time RIC sends the inference result to the DU; or the near-real-time RIC sends the inference result to the CU, the CU forwards the inference result to the DU, and the DU forwards the inference result to the RU.

In the first design, the near-real-time RIC is included in the access network device. Whether a non-real-time RIC is included outside the access network device is not limited. For example, the non-real-time RIC may be included outside the access network device, or the non-real-time RIC may not be included outside the access network device. The non-real-time RIC mainly processes non-real-time information, for example, delay-insensitive data. A delay of the data may be at a second level. The near-real-time RIC mainly processes near-real-time information, for example, delay-sensitive data. A delay of the data is tens of milliseconds.

In a second design, refer to FIG. 2. A non-real-time RIC is included outside the access network device. For example, the non-real-time RIC may be located in an operation, administration, and maintenance (operation administration, and maintenance, OAM) module, a core network device, or the like. This is not limited. The non-real-time RIC may train an AI model and use the AI model for inference. Optionally, the non-real-time RIC may collect information on a network side or a terminal side from one or more of a CU, a DU, an RU, a terminal, or the like. The information may be used as training data or inference data. For example, the information is used as the training data, and the non-real-time RIC may train the AI model based on the training data. Alternatively, the information is used as the inference data, and the non-real-time RIC uses the inference data and an AI model to determine an inference result. Optionally, the non-real-time RIC may send the inference result to one or more of the CU, the DU, the RU, the terminal, or the like. Optionally, the CU and the DU may exchange the inference result. The DU and the RU may exchange the inference result.

In the second design, the non-real-time RIC is included outside the access network device. Whether the access network device includes a near-real-time RIC is not limited. For example, the access network device may include the near-real-time RIC, or the access network device may not include the near-real-time RIC.

In a third design, refer to FIG. 2. The access network device includes a near-real-time RIC, and the access network device includes a non-real-time RIC. Similar to the first design, the near-real-time RIC may perform model training and inference; and/or similar to the second design, the non-real-time RIC may perform model training and inference; and/or the non-real-time RIC may perform model training, and the near-real-time RIC may perform model inference. For example, the non-real-time RIC may send a trained AI model to the near-real-time RIC, and the near-real-time RIC uses the AI model for model inference. Optionally, the non-real-time RIC and/or the near-real-time RIC may collect information on a network side or a terminal side from one or more of a CU, a DU, an RU, a terminal, or the like. The information may be used as training data or inference data. For example, the information is used as the training data, and the non-real-time RIC trains an AI model based on the training data. Alternatively, the information is used as the inference data, and the near-real-time RIC uses an AI model and the inference data to determine an inference result. Optionally, the near-real-time RIC may send the inference result to one or more of the CU, the DU, the RU, the terminal, or the like. Optionally, the CU and the DU may exchange the inference result. The DU and the RU may exchange the inference result.

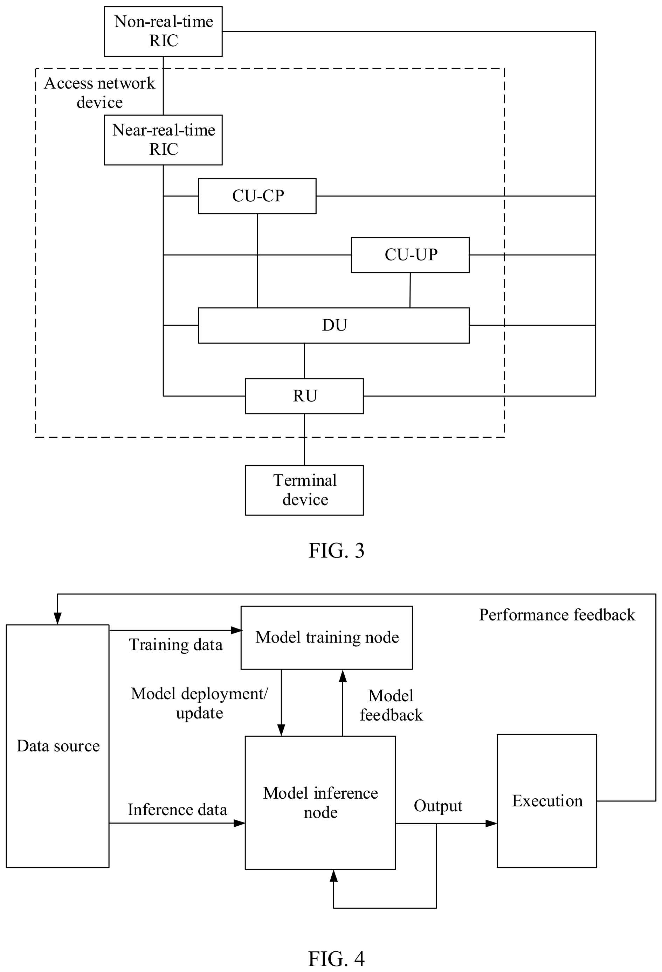

FIG. 3 is another O-RAN architecture according to this application. Compared with FIG. 2, in FIG. 3, a CU is split into a CU-CP and a CU-UP.

In embodiments of this application, information compression and decompression may be performed by using an AI technology. The following describes the AI technology, and the descriptions are not intended to limit embodiments of this application.

An AI model is a specific implementation of an AI function, and the AI model represents a mapping relationship between an input and an output of the model. The AI model may be a neural network, a linear regression model, a decision tree model, a support vector machine (support vector machine, SVM), a Bayesian network, a Q-learning model, another machine learning model, or the like. In embodiments of this application, the AI function may include one or more of the following: data collection (collecting training data and/or inference data), data preprocessing, model training (or referred to as model learning), model information release (configuring model information), model verification, model inference, inference result release, or the like. In embodiments of this application, the AI model may be referred to as a model for short.

FIG. 4 is a diagram of an application architecture of the AI model. A data source (data source) is configured to store training data and inference data. A model training node (model training host) analyzes or trains the training data (training data) provided by the data source, to obtain an AI model, and deploys the AI model in a model inference node (model inference host). Optionally, the model training node may further update the AI model that has been deployed in the model inference node. The model inference node may further feed back related information of the deployed model to the model training node, so that the model training node optimizes or updates the deployed AI model.

That the model training node obtains the AI model through learning is equivalent to that the model training node obtains, based on the training data through learning, a mapping relationship between an input and an output of the model. The model inference node uses the AI model to perform inference based on the inference data provided by the data source, to obtain an inference result. The method may alternatively be described as follows: The model inference node inputs the inference data to the AI model, and obtains the output by using the AI model. The output is the inference result. The inference result may indicate a configuration parameter used (executed) by an execution object, and/or an operation performed by the execution object. The inference result may be uniformly planned by an execution (actor) entity, and sent to one or more execution objects (for example, network entities) for execution. Optionally, the execution entity or the execution object may feed back, to the data source, a parameter or a measurement result of a measurement quantity collected by the execution entity or the execution object. This process may be referred to as performance feedback, and the fed-back parameter may be used as the training data or the inference data. Optionally, feedback information related to model performance may be further determined based on the inference result output by the model inference node, the feedback information is fed back to the model inference node, and the model inference node may feed back, to the model training node, performance information of the model based on the feedback information, so that the model training node optimizes or updates the deployed AI model. This process may be referred to as model feedback.

The AI model may be a neural network or another machine learning model. The neural network is used as an example. The neural network is a specific implementation form of a machine learning technology. According to a universal approximation theorem, the neural network can theoretically approximate any continuous function, so that the neural network has a capability of learning arbitrary mapping. Therefore, the neural network can accurately perform abstraction modeling for a complex high-dimension problem.

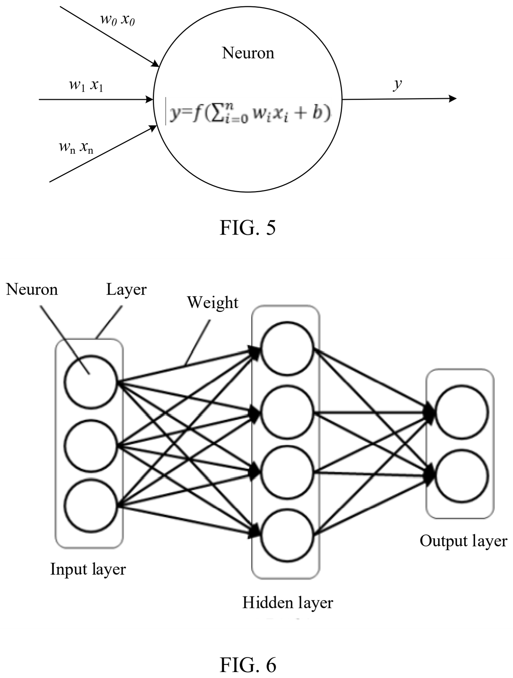

The idea of the neural network comes from a neuron structure of brain tissue. Each neuron performs a weighted summation operation on input values of the neuron, and outputs a weighted summation result through an activation function. FIG. 5 is a diagram of a structure of the neuron. It is assumed that inputs of the neuron are $x = [x_0, x_1, ..., x_n]$, weights corresponding to the inputs are respectively $w = [w, w_1, ..., w_n]$, and a bias of weighted summation is b. Forms of the activation function may be diversified. It is assumed that an activation function of a neuron is $y = f(z) = \max(0, z)$, and an output of the neuron is $y = f\left(\sum_{i=0}^{i=n} w_i * x_i + b\right) = \max\left(0, \sum_{i=0}^{i=n} w_i * x_i + b\right)$. For another example, an activation function of a neuron is $y = f(z) = z$, and an output of the neuron is

$$y = f\left(\sum_{i=0}^{i=n} w_i * x_i + b\right) = \sum_{i=0}^{i=n} w_i * x_i + b$$ . $x_i$, $w_i$, and b may be various possible values such as decimals, integers (including 0, positive integers, negative integers, or the like), or complex numbers. Activation functions of different neurons in a neural network may be the same or different.

The neural network generally includes a multi-layer structure, and each layer may include one or more neurons. A depth and/or a width of the neural network are/is increased, so that an expression capability of the neural network can be improved, and more powerful information extraction and abstract modeling capabilities can be provided for complex systems. The depth of the neural network may be a quantity of layers included in the neural network, and a quantity of neurons included in each layer may be referred to as the width of the layer. FIG. 6 is a diagram of a layer relationship of the neural network. In an implementation, the neural network includes an input layer and an output layer. The input layer of the neural network processes a received input through a neuron, and then transfers a result to the output layer, and the output layer obtains an output result of the neural network. In another implementation, the neural network includes an input layer, a hidden layer, and an output layer. The input layer of the neural network processes a received input through a neuron, and then transfers a result to the intermediate hidden layer. The hidden layer transfers a calculation result to the output layer or an adjacent hidden layer. Finally, the output layer obtains an output result of the neural network. One neural network may include one hidden layer or a plurality of hidden layers that are sequentially connected. This is not limited. In a training process of the neural network, a loss function may be defined. The loss function describes a gap or a difference between an output value of the neural network and an ideal target value. In embodiments of this application, a specific form of the loss function is not limited. The training process of the neural network is a process of adjusting a parameter of the neural network, such as the quantity of layers of the neural network, the width of the neural network, a weight of the neuron, and/or a parameter in an activation function of the neuron, so that a value of the loss function is less than a threshold or meets a target requirement.

In communication systems such as long term evolution (long term evolution, LTE) and new radio (new radio, NR), an access network device needs to obtain downlink channel state information (channel state information, CSI), to determine configurations such as a resource, a modulation and coding scheme (modulation and coding scheme, MCS), and precoding for a downlink data channel scheduled by a terminal. In a time division duplex (time division duplex, TDD) system, due to reciprocity between uplink and downlink channels, an access network device may determine uplink CSI by measuring an uplink reference signal, to infer downlink CSI. For example, the uplink CSI is used as the downlink CSI. In a frequency division duplex (frequency division duplexing, FDD) system, because uplink and downlink reciprocity cannot be ensured, a terminal measures a downlink reference signal, obtains downlink CSI, and reports the downlink CSI to an access network device. For example, in an implementation, the terminal generates a CSI report in a manner such as protocol predefinition or access network configuration, where the CSI report includes the downlink CSI. Optionally, the downlink reference signal measured by the terminal includes a downlink reference signal such as a channel state information reference signal (channel state information reference signal, CSI-RS) or a synchronization signal block (synchronizing signal/physical broadcast channel block, SSB).

In the NR protocol, a downlink CSI feedback procedure includes: An access network device sends a downlink reference signal to a terminal, where the downlink reference signal may be a CSI-RS. The terminal performs channel measurement, interference measurement, and the like on the received CSI-RS, to obtain a measurement result. The terminal determines, based on the measurement result, feedback quantities such as a rank indicator (rank indicator, RI), a channel quality indicator (channel quality indicator, CQI), and a precoding matrix index (precoding matrix indicator, PMI). The terminal reports the downlink CSI to the access network device, where the downlink CSI includes the feedback quantities measured by the terminal, such as the RI, the CQI, and the PMI. The RI indicates a quantity that is of layers for downlink transmission and that is recommended by the terminal, the CQI indicates an MCS supported by a downlink channel condition recommended by the terminal, and the PMI indicates a precoding scheme recommended by the terminal.

A precoding technology is an important way to increase a communication rate. In the precoding technology, a transmitter assigns, by using a plurality of antennas, or referred to as antenna ports, a weight to data transmitted through each antenna, to implement beamforming effect, so that a signal transmitted by the transmitter better matches a channel condition. For example, downlink precoding is used as an example. A downlink signal sent by the access network device is X, a downlink channel is H, a downlink precoding matrix is W, and noise is N0. In this case, the downlink signal sent by the access network device is S=WX, and the downlink signal received by the terminal from the access network device is Y=HWX+N0.

A quantity of layers fed back by the PMI corresponds to the RI. For example, if the quantity that is of layers for downlink transmission and that is indicated by the RI is n, the terminal needs to feed back PMIs of the n layers to the access network device. On an access network device side, the access network device precodes a downlink signal by using a PMI at each layer, to implement beamforming effect. To be specific, the access network device performs precoding by using the PMI of each layer, to form a corresponding beam, and sends a downlink signal to the terminal through the corresponding beam, so that beamforming can be implemented, and transmission quality of the downlink signal can be improved.

In conventional CSI feedback, a series of codewords may be agreed on in advance, and the codewords may also be referred to as codewords corresponding to a precoding matrix. In a design, each layer corresponds to one codeword, and the terminal feeds back, to the access network device, a number of a codeword corresponding to a precoding matrix of each layer. Alternatively, each layer corresponds to a plurality of codewords, and the plurality of codewords may be weighted by using a weighting coefficient. For each layer, the terminal feeds back, to the access network device, a plurality of codewords and corresponding weighting coefficients. The access network device determines a final precoding matrix based on the plurality of codewords and the corresponding weighting coefficients that are fed back by the terminal.

To improve CSI feedback precision, the terminal may compress the downlink channel information obtained through measurement, and the terminal feeds back the compressed downlink channel information to the access network device. The compressed downlink channel information may be referred to as compressed information for short. The terminal simultaneously feeds back a plurality of pieces of compressed information to the access network device. How the terminal indicates a length of each piece of compressed information to the access network device is a problem to be resolved in embodiments of this application.

For example, the terminal feeds back three pieces of compressed information to the access network device, and a sum of lengths of the three pieces of feedback information is 1024 bits. For example, in the 1024 bits, a length of a first piece of compressed information is 512 bits, a length of a second piece of compressed information is 256 bits, and a length of a third piece of compressed information is 256 bits. After receiving the 1024 bits, the access network device needs to determine which bits in the 1024 bits respectively correspond to the first, second, and third pieces of compressed information. However, in embodiments of this application, the terminal may indicate a length of each piece of compressed information to the access network device, and the access network device determines, based on the length of each piece of compressed information, a bit corresponding to each piece of compressed information.

[Embodiment 1]

In the solution of Embodiment 1, a first communication apparatus determines L pieces of compressed information, where the compressed information is compressed information of downlink channel information, and L is an integer greater than or equal to 1; and the first communication apparatus sends the L pieces of compressed information and first indication information to a second communication apparatus, where the first indication information includes first information, the first information indicates one combination in at least one combination, the one combination in the at least one combination includes L compressed information lengths corresponding to the L pieces of compressed information, the at least one combination is determined based on a quantity L of the pieces of compressed information and/or a sum B of lengths of the L pieces of compressed information, and B is an integer greater than 0.

The first communication apparatus may be a terminal, or a chip, a circuit, or the like used in a terminal. The second communication apparatus may be an access network device, a non-real-time RIC, or a chip, a circuit, or the like used in an access network device or a non-real-time RIC. A procedure is provided by using an example in which the first communication apparatus is a terminal and the second communication apparatus is an access network device. It may be understood that, when the second communication apparatus is a non-real-time RIC, the access network device may serve as an intermediate node between the terminal device and the non-real-time RIC. For example, the access network device may forward the received L pieces of compressed information and the received first indication information to the non-real-time RIC. Optionally, the second communication apparatus may be one or a combination of a near-real-time RIC, a CU, a DU, or an RU. The near-real-time RIC communicates with the terminal through one or a combination of the CU, the DU, or the RU.

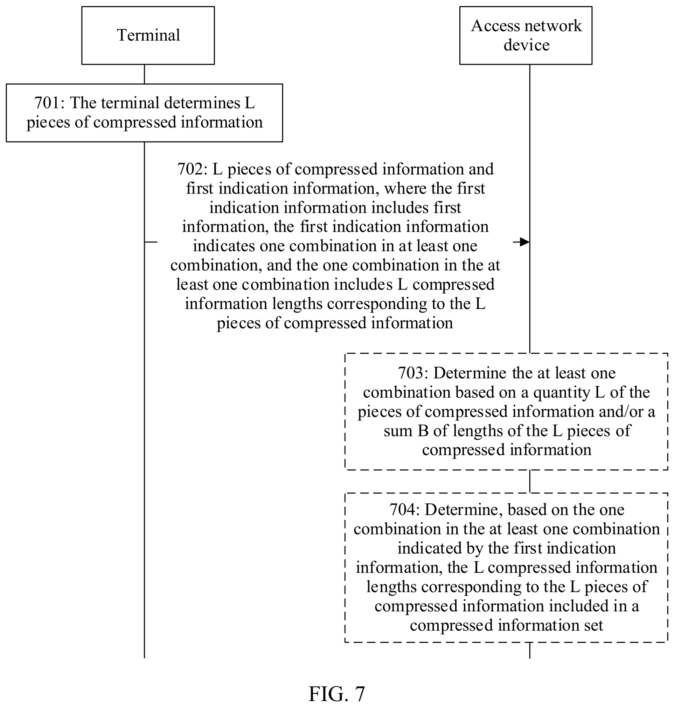

As shown in FIG. 7, the procedure includes the following steps.

Step 701: The terminal determines the L pieces of compressed information.

The compressed information is the compressed information of the downlink channel information. The compressed information may also be referred to as feedback information, feedback information of a downlink channel, another name, or the like. This is not limited.

In an implementation, a value of L is a value of a rank (Rank). Optionally, the value of the rank is a quantity of layers at which the terminal receives downlink data. It may be understood that the downlink data may be from one or more access network devices.

In an implementation, the L pieces of compressed information may also be referred to as a CSI report, that is, the CSI report includes the L pieces of compressed information.

In an implementation, the channel information is a downlink channel response, and the terminal may receive a downlink reference signal from the access network device, measure the downlink reference signal, and determine a downlink channel response H; and the terminal may compress the downlink channel response H to determine the L pieces of compressed information, where the compressed information is compressed information of the downlink channel response H. For example, each piece of compressed information corresponds to a channel between the terminal and one antenna port group, and different compressed information corresponds to different antenna port groups; or each piece of compressed information corresponds to a channel of a different frequency band (subcarrier and subcarrier group), and different pieces of compressed information correspond to different frequency bands (subcarriers and subcarrier groups); or each piece of compressed information corresponds to different combinations of antenna ports and subcarrier groups. Alternatively, the channel information is L eigenvectors V obtained by performing, by the terminal, eigen-decomposition or singular value decomposition on the downlink channel response H or a covariance matrix of the downlink channel response H; and the terminal compresses the L eigenvectors V to determine the L pieces of compressed information, where the compressed information is compressed information of the eigenvector V, and the like. Alternatively, the channel information may be determined by performing another operation on the channel response. This is not limited.

In a design, the terminal may compress the downlink channel information in an AI manner, to determine the L pieces of compressed information. Correspondingly, the access network device may decode the L pieces of compressed information in the AI manner, to restore the L pieces of downlink channel information.

For example, an encoder is disposed on a terminal side, and a decoder is disposed on an access network device side. The encoder and the decoder may be predefined, or may be trained by another device and configured for the terminal and the access network device. The another device may be a non-real-time RIC or a core network device such as an OAM module. Alternatively, the access network device trains an encoder and a decoder, and configures the encoder for the terminal. Alternatively, the terminal trains an encoder and a decoder, and configures the decoder for the access network device. Alternatively, the access network device trains a decoder, the terminal trains an encoder, or the like. The encoder is configured to compress the downlink channel information, and the encoder may also be referred to as a compression model, an AI model, a first model, or the like. The decoder is configured to decompress, restore, or reconstruct the compressed downlink channel information (compressed information), and the decoder may also be referred to as a decompression model, an AI model, a second model, or the like.

The solution in this embodiment of this application may be applied to a single-station scenario. The single-station means that one access network device serves a terminal. A value of L is equal to a quantity of layers at which the access network device sends downlink data to one terminal, and the layer is also referred to as a flow. The quantity of layers is the value of the rank (rank). The terminal may feed back, to the access network device, channel information (channel eigenvectors) of a plurality of layers, to perform precoding, scheduling, and the like on downlink signals of the plurality of layers. Therefore, the terminal may feed back the L pieces of compressed information. Each piece of compressed information corresponds to channel information of one layer. In other words, the access network device sends the downlink signal to the terminal through L layers. For example, for each layer, the access network device obtains one piece of compressed information, decompresses the compressed information to restore corresponding downlink channel information, and precodes a downlink signal based on the downlink channel information.

Alternatively, the solution in this embodiment of this application may be applied to a multi-station scenario. The multi-station means that a plurality of access network devices collaboratively serve one terminal. A value of L is equal to a product of a quantity of layers at which each access network device sends a downlink signal to one terminal and a quantity of access network devices that collaboratively serve the terminal, that is, L=quantity of layers of each access network device×quantity of access network devices that collaboratively serve. For example, if three access network devices collaboratively serve one terminal, and each access network device sends a downlink signal to the terminal through two layers, the value of L is equal to 6 (3×2). In a multi-station and multi-layer scenario, a plurality of access network devices may separately send downlink reference signals to a terminal, and the terminal separately measures the downlink reference signals sent by the plurality of access network devices, to obtain downlink channel information of a plurality of layers of each access network device. The terminal compresses the downlink channel information of the plurality of layers of the plurality of access network devices, to obtain the L pieces of compressed information. The terminal sends the L pieces of compressed information to one or more of the plurality of access network devices. For example, the terminal may broadcast the L pieces of compressed information, and access network devices that collaboratively serve may receive the L pieces of compressed information that are broadcast. Alternatively, the terminal may send the L pieces of compressed information to one of the access network devices that collaboratively serve, and the plurality of access network devices that collaboratively serve may communicate with each other, for example, the plurality of access network devices may be connected to each other through an optical fiber. The access network device that receives the L pieces of compressed information may share the compressed information with other access network devices that collaboratively serve. Alternatively, the access network device that receives the L pieces of compressed information may decompress the L pieces of compressed information, to determine L pieces of downlink channel information. The access network device obtains, from the L pieces of downlink channel information, downlink channel information corresponding to the access network device, and separately sends remaining L-1 pieces of downlink channel information to corresponding access network devices.

It may be understood that, when a quantity of layers at which each of the plurality of access network devices that collaboratively serve sends a downlink signal to one terminal is equal to 1, the value of L is equal to a quantity of access network devices that collaboratively serve.

In this embodiment of this application, the terminal may compress the downlink channel information according to a conventional compression algorithm, or the terminal may compress the downlink channel information in an AI manner. For example, in a single-station and multi-layer scenario, downlink channel information is compressed in the AI manner to determine the L pieces of compressed information.

The terminal measures the downlink reference signal sent by the access network device, to determine the downlink channel response H; and performs eigen-decomposition or singular value decomposition on the downlink channel response H or the covariance matrix of the downlink channel response H, to determine the plurality of eigenvectors V of the downlink channel. Each row or each column of an eigenvector matrix V may also be referred to as an eigenvector. For example, eigenvalues or singular values may be sorted, for example, in descending order or ascending order, to separately obtain an eigenvector of a first layer, an eigenvector of a second layer, an eigenvector of a third layer, and the like.

Optionally, a frequency domain dimension may be further considered. To be specific, each eigenvector is augmented with the frequency domain dimension, to obtain an eigenvector matrix of the first layer, an eigenvector matrix of the second layer, an eigenvector matrix of the third layer, and the like. Alternatively, the frequency domain dimension is not considered, and the eigenvector of the first layer, the eigenvector of the second layer, the eigenvector of the third layer, and the like may also be referred to as the eigenvector matrix of the first layer, the eigenvector matrix of the second layer, the eigenvector matrix of the third layer, and the like. Optionally, the access network device and the terminal may agree on a correspondence between an eigenvector matrix and a layer in advance in a manner, for example, predefining the correspondence based on a protocol or transferring the correspondence between the access network device and the terminal, so that the access network device and the terminal have consistent understanding of the correspondence between the eigenvector matrix and the layer. For example, the access network device and the terminal may agree that eigenvector matrices may be sorted in descending order based on eigenvalues or singular values, to separately obtain the eigenvector matrix of the first layer, the eigenvector matrix of the second layer, the eigenvector matrix of the third layer, and the like.

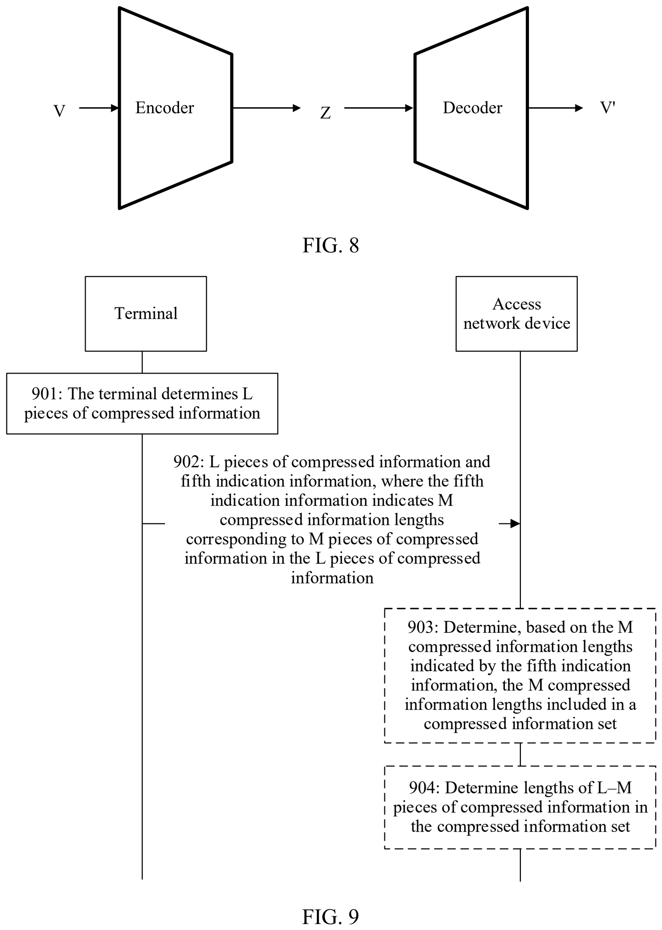

As shown in FIG. 8, for an eigenvector matrix or channel information of any layer, the terminal inputs an eigenvector matrix V of the layer to an encoder, and an output of the encoder is a compressed eigenvector matrix Z. The compressed eigenvector matrix Z may be referred to as one piece of compressed information. For example, Z includes B' elements, and each element is a bit whose value is 0 or 1, or each element is a floating point number, or each element is a number in another form. B' may be referred to as a length of the compressed information. Alternatively, a compressed eigenvector is quantized to obtain B" bits whose values are 0 or 1, and B" may be referred to as a length of the compressed information, a bit length of the compressed information, a bit occupied by the compressed information, or the like. In a single-station scenario, an access network device sends a reference signal to a terminal; and the terminal may obtain downlink channel information by measuring the reference signal, to determine channel eigenvector matrices of L layers, and further determine L compressed eigenvector matrices Z, that is, the terminal may obtain L pieces of compressed information. Lengths of the L pieces of compressed information may be the same or different. This is not limited. For example, due to different sparseness of eigenvector matrices at all layers, lengths of corresponding compressed information Z may be different. For example, for a dense eigenvector matrix (a quantity of zero elements in a representation obtained by projecting the eigenvector matrix to a linear space is small, or a quantity of elements close to zero is small), a large quantity of bits are required to represent the eigenvector matrix, and corresponding compressed information may be long. Alternatively, for a sparse eigenvector matrix (a quantity of zero elements in a representation obtained by projecting the eigenvector matrix to a linear space is large, or a quantity of elements close to zero is large), a small quantity of bits are used to represent the eigenvector matrix, and corresponding compressed information may be short.

Then, the terminal may send the L pieces of compressed information (for example, L compressed eigenvector matrices Z) to the access network device. The access network device inputs the L pieces of compressed information into the decoder, to restore or reconstruct L eigenvector matrices V'.

The L pieces of compressed information may be compressed information of a downlink channel measured this time, that is, downlink channel information. For example, as described above, the terminal determines the L pieces of downlink channel information by measuring the downlink reference signal, and further, determines the L pieces of compressed information. Alternatively, the L pieces of compressed information are compressed information of predicted channel information. For example, the terminal obtains at least one piece of downlink channel information previously obtained through measurement. The terminal predicts channel information at a future moment based on the at least one piece of downlink channel information, and compresses the predicted channel information to obtain the L pieces of compressed information and the like. Alternatively, the L pieces of compressed information are compressed information of preprocessed channel information. In this case, the terminal obtains at least one piece of downlink channel information previously obtained through measurement, preprocesses the at least one piece of downlink channel information to obtain preprocessed channel information, and compresses the preprocessed channel information to obtain the L pieces of compressed information and the like. For example, a preprocessing manner is one or more of performing phase rotation on the channel information obtained through measurement, or performing weighted summation on a plurality of pieces of channel information. A manner of predicting the L pieces of downlink channel information and a manner of compressing the L pieces of predicted downlink channel information are not limited. For example, a model may be pre-trained in an AI manner, and the model may be referred to as a prediction model, a third model, an AI model, or the like. The terminal may input, into the prediction model, the at least one piece of downlink channel information obtained through measurement, and an output of the prediction model is the L pieces of predicted downlink channel information. Alternatively, the terminal may input, into the prediction model, the at least one piece of downlink channel information obtained through measurement, and an output of the prediction model is the predicted downlink channel information; and the terminal performs singular value decomposition (singular value decomposition, SVD) on the downlink channel information, to obtain the L pieces of channel information, and inputs the L pieces of channel information into the foregoing encoder, to obtain the L pieces of compressed information. Alternatively, the terminal obtains the predicted channel information according to a conventional prediction algorithm. This is not limited.

Optionally, in this embodiment of this application, the L pieces of compressed information may be L pieces of quantized compressed information. The downlink channel information may be first compressed and then quantized, or may be first quantized and then compressed. This is not limited. Compression and quantization may be implemented by using a same model. For example, in addition to compressing the downlink channel information, the foregoing encoder may further quantize the downlink channel information. Alternatively, compression and quantization may be implemented by using different models. For example, the foregoing encoder is configured to compress the downlink channel information. Quantization may be implemented by using another model. The another model may be referred to as a quantization model, a fourth model, another name, or the like. This is not limited. Alternatively, quantization may be implemented according to a conventional quantization algorithm. This is not limited.

Step 702: The terminal sends the L pieces of compressed information and the first indication information to the access network device.

The first indication information indicates the one combination in the at least one combination, the one combination in the at least one combination includes the L compressed information lengths corresponding to the L pieces of compressed information, the at least one combination is determined based on the quantity L of the pieces of compressed information and/or the sum B of the lengths of the L pieces of compressed information, and B is an integer greater than 0.

That the at least one combination is determined based on the quantity L of the pieces of compressed information and/or the sum B of the lengths of the L pieces of compressed information may alternatively be replaced with that determining of the at least one combination is related to the quantity L of the pieces of compressed information and/or the sum B of the lengths of the L pieces of compressed information; or the at least one combination is related to the quantity L of the pieces of compressed information and/or the sum B of the lengths of the L pieces of compressed information.

Specifically, the first indication information includes the first information, and the first information indicates the one combination in the at least one combination.

It may be understood that the L compressed information lengths include a length corresponding to each of the L pieces of compressed information, and the L pieces of compressed information correspond to L lengths that may be referred to as L compressed information lengths. As described above, at least two of the L lengths may be the same or may be different. A compressed information length may be a length of compressed information, for example, a quantity of bits occupied by the compressed information, or a length of bits occupied by the compressed information. For example, a length of one piece of compressed information may be 128 bits, 256 bits, or 512 bits. The sum B of the lengths of the L pieces of compressed information is a sum of the L lengths corresponding to the L pieces of compressed information. For example, if the value of L is equal to 2, and lengths of the two pieces of compressed information are respectively 128 bits and 128 bits, a sum B of the lengths of the two pieces of compressed information is equal to 256 bits.

In addition, "a network element A sends information A to a network element B" in embodiments of this application may be understood as that a destination end of the information A or an intermediate network element on a transmission path to a destination end is the network element B; and may include directly or indirectly sending the information to the network element B. "The network element B receives the information A from the network element A" may be understood as that a source end of the information A or an intermediate network element on a transmission path from a source end is the network element A; and may include directly or indirectly receiving the information from the network element A. Necessary processing, such as a format change, may be performed on information between a source end and a destination end for information sending. However, the destination end can understand valid information from the source end. Similar descriptions in this application may be understood similarly. Details are not described herein again.

The following respectively describes, by using Example 1, Example 2, and Example 3, three cases: The at least one combination is determined based on the quantity L of the pieces of compressed information and the sum B of the lengths of the L pieces of compressed information, the at least one combination is determined based on the quantity L of the pieces of compressed information, and the at least one combination is determined based on the sum B of the lengths of the L pieces of compressed information.

[Example 1]

The at least one combination is determined based on the quantity L of the pieces of compressed information and the sum B of the lengths of the L pieces of compressed information.

For example, the terminal determines a quantity of possible values of a length of each of the L pieces of compressed information. Optionally, the quantity of possible values of the length of each of the L pieces of compressed information, that is, a quantity of candidate values, is related to a quantity of AI encoders. For example, there are 16 encoders on a terminal side, and lengths of outputs of the 16 encoders are different, to meet requirements of different feedback overheads and feedback precision. In this case, there are 16 possible values of the length of each piece of compressed information output by the encoder. For example, the 16 possible values of the compressed information length are respectively {60, 70, 80, ..., 210}. Further, the at least one combination may be determined based on the possible value of each compressed information length of the L pieces of compressed information and the value of L. At least one combination corresponding to different values of L and B may be predetermined, may be sent by the access network device to the terminal, or may be determined by the terminal according to a predetermined rule. An implementation of the predetermined rule is as follows: For example, if the value of L is equal to 2, a length of each of the two pieces of compressed information has 16 values, and lengths of the two pieces of compressed information has 256 (16×16) combinations. Further, the terminal may determine, from the 256 combinations, a combination that meets a sum of lengths is equal to B. The first information indicates one of the plurality of combinations, to indicate the L compressed information lengths, and bits occupied by the first information are determined based on a quantity of combinations included in the plurality of combinations.

For example, the value of L is equal to 2, the terminal obtains two pieces of compressed information, a length $b_1$ of first compressed information is equal to 200, and a length $b_2$ of second compressed information is equal to 200. The foregoing example is still used. Each compressed information length has 16 possible values. In this case, the terminal may determine or find, based on values of L and B, L=2, and B=400, that a plurality of combinations include the following three combinations: {$b_1$ = 210, $b_2$ = 190}, {$b_1$ = 200, $b_2$ = 200}, and {$b_1$ = 190, $b_2$ = 210}. Therefore, the first information needs to indicate that the L compressed information lengths are a second combination in the three combinations. For the three combinations, the terminal may indicate one of the combinations by $\lceil log_2(3) \rceil = 2$ bits. The foregoing first information may occupy 2 bits.

A generation rule of an identifier of the at least one combination is predefined, for example, specified in a protocol, or determined by the terminal and notified to the access network device, or determined by the access network device and notified to the terminal. This is not limited. For example, the at least one combination is sorted in descending order of values of first compressed information lengths in the L pieces of compressed information, a plurality of combinations with a same length of the first compressed information length are sorted in descending order of values of second compressed information lengths in the L pieces of compressed information, and the rest can be deduced by analogy. The sorted combinations are separately encoded in a sequence, or this is referred to as setting corresponding identifiers. For example, the foregoing three combinations are sorted in descending order of values of b1, to obtain the following three sorted combinations: {$b_1$ = 210, $b_2$ = 190}, {$b_1$ = 200, $b_2$ = 200}, and {$b_1$ = 190, $b_2$ = 210}. Identifiers allocated by the terminal to the three combinations may be respectively 00, 01, and 10. In the foregoing example, the lengths of the two pieces of compressed information fed back by the terminal are respectively 200 and 200. It can be learned that a corresponding identifier is 10, that is, the foregoing first information includes a binary bit 10.

In this design, a quantity of bits occupied by the first information is less than a sum of quantities of bits occupied by the L compressed information lengths in a case in which the L compressed information lengths are separately indicated. Optionally, when the lengths of the L pieces of compressed information are separately indicated, a quantity of bits occupied to indicate each compressed information length of the L pieces of compressed information is determined based on a possible value of each compressed information length. For example, if each compressed information length has 16 possible values, it indicates that each compressed information length needs to occupy $\lceil log_2(16) \rceil = 4$ bits. In the foregoing example, when the value of L is equal to 2, it indicates that 8 bits need to be occupied to indicate two compressed information lengths. However, in the foregoing design, the first information occupies 2 bits, and the quantity of bits occupied by the first information is 2, and is less than the sum of 8 bits occupied by the two compressed information lengths in a case in which the two compressed information lengths are separately indicated.

In an implementation, the foregoing process may be described as follows: The terminal determines the L compressed information lengths, where the L compressed information lengths may be denoted as {$b_1$, ... , $b_L$}. The terminal may calculate the sum B = $\sum_i b_i$ of the compressed information lengths, and further, the terminal may determine or find at least one combination corresponding to a case in which the value of L and the sum B of the compressed information lengths are given, where a quantity of the at least one combination is denoted as $N_{L,B}$. For example, in the foregoing example, there are three combinations that meet L and B, and a value of $N_{L,B}$ is equal to 3. The terminal indicates one of the

$N_{L,B}$combinations by $\left\lceil \log_2(N_{L,B}) \right\rceil$ bits, to indicate the lengths of the L pieces of compressed information.

The quantity of the at least one combination is equal to or less than a quantity of all combinations that are of the L compressed information lengths and that meet the sum B of the lengths of the L pieces of compressed information. For example, in the at least one combination that meets the sum B of the L compressed information lengths, some combinations may be inappropriate. For example, when the L pieces of compressed information are compressed information of channel eigenvectors of L layers, eigenvalues corresponding to the channel eigenvectors of the plurality of layers are sorted in descending order, and a channel eigenvector with a lower eigenvalue is less sparse. In this case, the lengths of the L pieces of compressed information need to be sorted in ascending order. Therefore, the at least one combination that meets the sum B of the compressed information lengths may not include a combination in which the lengths of the compressed information are sorted in descending order. In this case, a quantity of the at least one optional combination may be denoted as $N'_{L,B}$, and $\left\lceil \log_2(N'_{L,B}) \right\rceil$ may represent the L compressed information lengths.

In Example 1, the terminal feeds back the first information to the access network device, where the first information may indicate the one combination in the at least one combination, and the at least one combination is determined based on L and B, to limit a possible value of the at least one combination, thereby reducing overheads of bits occupied by the first information. Compared with a manner of independently indicating the lengths of the L pieces of compressed information, this design can reduce information feedback overheads.

[Example 2]

The at least one combination is determined based on the quantity L of the pieces of compressed information.
The at least one combination may be determined based on a value of L (the at least one corresponding combination may be predetermined, may be sent by the access network device to the terminal, or may be determined by the terminal according to a predetermined rule). For example, there is a table corresponding to each value of L, each row in the table is a combination, and each combination indicates a manner of setting the L compressed information lengths. For another example, the terminal determines the at least one combination based on the value of L and the predetermined rule. In an implementation, for example, as shown in Table 1a, Table 1a', or Table 1b, each row in Table 1a, Table 1a', or Table 1b is considered as a combination. The terminal stores Table 1a, Table 1a', or Table 1b, and may determine the at least one combination based on the value of L in Table 1a, Table 1a', or Table 1b. Specifically, the terminal may select, from Table 1a, Table 1a', or Table 1b based on the quantity L of the pieces of compressed information, the at least one combination that meets the quantity of pieces of compressed information. In this case, it may be considered that the at least one determined combination is determined based on the quantity L of the pieces of compressed information. A difference between Table 1a and Table 1b lies in that values of sums of lengths corresponding to all rows in Table 1a are the same, for example, a sum of a length corresponding to each row is equal to 200; and values of sums of lengths corresponding to all the rows in Table 1b are different. Further, there may be a table, values of sums of lengths corresponding to some rows in the table are the same, and the table is not shown. A difference between Table 1a and Table 1a' lies in that an index of Table 1a is determined based on a quantity of all length combinations corresponding to all Ls, and an index of Table 1a' is determined based on a quantity of all length combinations corresponding to a single L. It may be understood that an index in Table 1b may alternatively be replaced with an index value determined based on a quantity of all length combinations corresponding to a single L. In addition, it should be understood that values of items in the table values in this application are all examples, and may be replaced with a first value, a second value, a third value, ..., and the like of an item. For example, a length combination may be a first length combination, a second length combination, a third length combination, ..., and an index may be a first index, a second index, a third index, ..., and the like. This is not limited herein.
It may be understood that tables provided in embodiments of this application may be split or combined to form a new table. For example, Table 1a, Table 1a', or Table 1b may be split into a plurality of tables based on the value of L; Table 2a or Table 2b may be split into a plurality of tables based on a value of B; or Table 3 may be split into a plurality of tables based on the value of L and/or a value of B. In addition, the tables in embodiments of this application may be represented or stored in another form, for example, represented or stored in a form of a formula or a character string. This is not limited herein.

Table 1a

| Index | L | Length combination |
|---|---|---|
| 1 | 1 | {200} |
| 2 | 2 | {80, 120} |
| 3 | 2 | {100, 100} |

(continued)

| Index | L | Length combination |
|---|---|---|
| 4 | 3 | {40, 80, 80} |
| 5 | 3 | {20, 80, 100} |

Table 1a'

| Index | L | Length combination |
|---|---|---|
| 0 | 1 | {200} |
| 0 | 2 | {80, 120} |
| 1 | 2 | {100, 100} |
| 0 | 3 | {40, 80, 80} |
| 1 | 3 | {20, 80, 100} |

Table 1b

| Index | L | Length combination |
|---|---|---|
| 1 | 1 | {200} |
| 1 | 2 | {80, 100} |
| 2 | 2 | {100, 60} |
| 1 | 3 | {20, 80, 40} |
| 2 | 3 | {20, 100} |

The at least one combination described in Table 1a or Table 1b may be predefined, or may be indicated by the access network device to the terminal. For a manner in which the access network device indicates the at least one combination shown in Table 1a or Table 1b to the terminal, refer to the following descriptions. The terminal may select, based on the quantity L of the pieces of compressed information, at least one combination from the at least one combination shown in Table 1a or Table 1b. For example, when the value of L is equal to 2, length combinations corresponding to a case in which the value of L is equal to 2 may be selected from the at least one combination in Table 1a, and are respectively {80, 120} and {100, 100}. The terminal may separately indicate one of the two combinations by using 1 bit, for example, 0 and 1, that is, indexes respectively corresponding to the two combinations in Table 1a'. In this case, a generation rule of an identifier of the at least one combination may be predefined, may be determined by the access network device and notified to the terminal, or may be determined by the terminal and notified to the access network device, or the like. This is not limited. Alternatively, the terminal may indicate a combination by using an index corresponding to Table 1a. For example, if a length combination that needs to be fed back by the terminal to the access network device is {80, 120}, the first information included in the first indication information sent by the terminal to the access network device carries a binary bit 10 corresponding to an index "2". In this case, the first information occupies 2 bits. Alternatively, if a length combination indicated by the terminal to the access network device is {100, 100}, the first information included in the first indication information sent by the terminal to the access network device carries a binary bit 11 corresponding to an index "3". In this case, the first information occupies 2 bits.

Optionally, a quantity of the at least one selected combination is less than or equal to a quantity of all combinations of the L compressed information lengths. In this embodiment of this application, all combinations of the L compressed information lengths may be configured in Table 1a or Table 1b, or only some of all combinations of the L compressed information lengths may be configured in Table 1a or Table 1b, to further reduce information feedback overheads.

[Example 3]

The at least one combination is determined based on the sum B of the lengths of the compressed information.

The terminal may determine the at least one combination (the at least one corresponding combination may be predetermined, may be sent by the access network device to the terminal, or may be determined by the terminal according to a predetermined rule) based on the sum B of the lengths of the compressed information. For example, the sum B of the lengths of the compressed information is given, there is a corresponding table, each row in the table is a combination, each combination indicates a value setting manner of a plurality of compressed information lengths, and a sum of the plurality of compressed information lengths of each combination is equal to B. For another example, the terminal determines the at least one combination based on a value of B and the predetermined rule. An implementation in which the terminal determines the at least one combination according to the predetermined rule is as follows: As shown in Table 2a or Table 2b, each row in Table 2a or Table 2b is considered as a combination. Table 2a or Table 2b is stored on a terminal side, and the terminal may determine the at least one combination based on Table 2a or Table 2b. The terminal may select, from the at least one combination, at least one combination that meets the sum B of the lengths of the compressed information. In this case, the at least one selected combination may be considered to be determined based on the sum B of the lengths of the compressed information.

Table 2a

| Index | L | Length combination |
|-------|---|--------------------|
| 0 | 1 | {200} |
| 1 | 2 | {80, 120} |
| 2 | 2 | {120, 120} |
| 3 | 3 | {40, 80, 80} |
| 4 | 3 | {80, 80, 100} |

Table 2b

| Index | L | Length combination |
|-------|---|--------------------|
| 0 | 1 | {200} |
| 1 | 2 | {80, 120} |
| 2 | 3 | {40, 80, 80} |
| 0 | 2 | {120, 120} |
| 0 | 3 | {80, 80, 100} |

The at least one combination shown in Table 2a or Table 2b may be predefined, or may be indicated by the access network device to the terminal. For a manner in which the access network device indicates the at least one combination to the terminal, refer to the following descriptions. The terminal may select, based on a total bit length B of the compressed information, at least one combination from the at least one combination shown in Table 2a or Table 2b. For example, when a sum B of bit lengths of the L pieces of compressed information is equal to 200, in the at least one combination shown in Table 2b, it is determined that there are three combinations whose sum of lengths is equal to 200, which are respectively {200}, {80, 120}, and {40, 80, 80}. Therefore, the terminal may use 2 bits to indicate one of the three combinations. Any one of the three combinations may be represented by 2 bits. The first information in the first indication information sent by the terminal to the access network device occupies 2 bits. Optionally, a generation rule of an identifier of the at least one combination may be predefined, may be notified by the access network device to the terminal, or may be notified by the terminal to the access network device, or the like. This is not limited. Alternatively, the terminal may indicate a combination by using an index shown in Table 2a or Table 2b. For example, in Table 2a, if the terminal indicates a length combination {80, 80, 100} to the access network device, the first information included in the first indication information sent by the terminal to the access network device carries bit data 100 corresponding to an index "4". In this case, the first information occupies 3 bits.

Optionally, a quantity of the at least one combination is less than or equal to a quantity of all combinations that are of the compressed information lengths and that meet the sum B of the lengths of the compressed information. In the example of Example 1, there are three possible combinations that meet the sum B=400 of the lengths. In this embodiment of this application, all the three possible combinations may be configured in Table 2a or Table 2b, or only some of the three combinations may be configured in Table 2a or Table 2b, to further reduce information feedback overheads.

In Example 3, a quantity of bits occupied by the first information is less than a total quantity of bits occupied by indication information of the L compressed information lengths in a case in which each compressed information length is separately indicated. For example, if each compressed information length has 16 possible values, 4 bits are required to indicate compressed information lengths of one combination. When the value of L may be 1, 2, 3, or 4, a maximum of 16 bits are required to indicate one of all possible compressed information length combinations. However, in descriptions of Example 3, the first information needs to occupy only 2 bits or 3 bits, so that information feedback overheads can be reduced.

In this embodiment of this application, the terminal or the access network device each may determine the at least one combination based on the quantity L of pieces of compressed information and/or the sum B of the compressed information lengths of the L pieces of compressed information in the foregoing manners. Alternatively, the at least one combination may be predefined, or may be determined by the access network device and indicated to the terminal. This is not limited. For example, for the at least one combination that is predefined or indicated by the access network device to the terminal, refer to Table 3.

Table 3

| Index | L | Length combination |
|-------|---|--------------------|
| 1 | 1 | {120} |
| 2 | 1 | {240} |
| 3 | 1 | ... |
| 4 | 2 | {80, 120} |
| 5 | 2 | {100, 100} |
| 6 | 2 | {120, 120} |
| 7 | 2 | ... |
| 8 | 3 | {80, 80, 80} |
| 9 | 3 | {40, 80, 120} |
| 10 | 3 | {120, 120, 120} |
| 11 | 3 | ... |

The terminal selects a corresponding combination from the at least one combination in Table 3 based on the L compressed information lengths that need to be fed back. The first information included in the first indication information sent by the terminal to the access network device carries an index of the corresponding combination. For example, if lengths of two pieces of compressed information that need to be fed back by the terminal to the access network device are respectively 80 and 20, the terminal selects, from the at least one combination shown in Table 3, a combination {80, 120} whose index is 4. In this case, the first information included in the first indication information sent by the terminal to the access network device carries a binary bit corresponding to "4". Alternatively, the terminal may determine, from the at least one combination shown in Table 3 based on the quantity L of the pieces of compressed information and the sum B of the compressed information lengths of the L pieces of compressed information, a combination that meets the condition. For example, when the value of L is equal to 2, and a sum of lengths of the two pieces of compressed information is equal to 200, there are two combinations that meet the condition in Table 3, and the two combinations are respectively {100, 100} and {80, 120}. The terminal configures corresponding identifiers for the two combinations that meet the condition. A generation rule of the identifiers of the two combinations may be predefined, may be determined by the access network device and notified to the terminal, or may be determined by the terminal and notified to the access network device, or the like. This is not limited. For example, the terminal may use 1 bit to indicate any one of the two combinations. For example, an identifier "0" is configured for the combination {100, 100}, and an identifier "1" is configured for the combination {80, 120}. The terminal may send, to the access network device, an index of a combination that actually needs to be fed back. For example, the first information included in the first indication information sent by the terminal to the access network device carries the corresponding index. In the foregoing example, if a length combination that needs to be fed back by the terminal is {80, 120}, the first information may carry the identifier "1".

It should be noted that, in Table 3, a quantity of at least one combination that meets the quantity L of pieces of compressed information and the sum B of the lengths of the L pieces of compressed information is less than or equal to a quantity of all combinations that are of the L compressed information lengths and that meet the sum B of the lengths of the L pieces of compressed information. For example, in the foregoing descriptions, there are three combinations that meet the sum B of the lengths of the L pieces of compressed information is equal to 400. All the three combinations may be configured in Table 3, or some of the three combinations may be configured in Table 3. When the some combinations are configured in Table 3, information feedback overheads can be further reduced. For example, in an original solution, when the terminal indicates any one of the three combinations to the access network device, overheads of $\lceil log_2(3) \rceil = 2$ bits are required. If two of the three combinations are configured in Table 3, overheads of $\lceil log_2(2) \rceil = 1$ bit are required for the terminal to indicate any one of the two combinations.

The access network device may indicate the at least one combination (for example, Table 3) to the terminal in the following manner: The terminal receives second indication information from the access network device, where the second indication information indicates the at least one combination. For example, one compressed information length included in the one combination in the at least one combination has N possible values, the one compressed information length is

represented by $\lceil log_2(N) \rceil$ bits, and the second indication information includes at least a bit corresponding to at least one compressed information length included in the one combination in the at least one combination, where N is an integer greater than 0. For example, a compressed information length of one piece of compressed information has N possible

values, and $\lceil log_2(N) \rceil$ bits may indicate a length of each piece of compressed information. In the at least one combination indicated by the access network device, quantities of compressed information lengths included in different combinations may be the same or different. When quantities of pieces of compressed information included in the at least two combinations are different, all combinations in the at least one combination are changed to a uniform length based on a maximum length, a value of the uniform length may be represented as $L_{max}$, and $L_{max}$ represents a maximum value of the quantity L of pieces of compressed information in the at least one combination. For example, each length combination shown in Table 3 may be changed to a fixed-length for representation. For example, if a value of $L_{max}$ in Table 3 is equal to 3, a length of each combination in Table 3 may be changed to three compressed information lengths. For example, a combination {120} in Table 3 may be rewritten as {120, 0, 0}, and a combination {80,120} may be rewritten as {80, 120, 0}.

Any combination in Table 3 is represented by $L_{max} \times \lceil log_2(N) \rceil$ bits, and $L_{max}$ represents a maximum value of L in the at least one combination shown in Table 3. Alternatively, a compressed information length of one piece of compressed information has N possible values, and each compressed information length is represented by $\lceil log_2(N) \rceil$ bits. In this case, the one combination in the at least one combination may be represented by $L \times \lceil log_2(N) \rceil$ bits, and L represents a value corresponding to L in the combination.

Alternatively, for the one combination in the at least one combination, the second indication information includes at least one of the following: indication information of a quantity of compressed information lengths included in the one combination, indication information of a sum of compressed information lengths corresponding to the one combination, or indication information of at least one compressed information length corresponding to the one combination. For example, the second indication information may include the indication information of the quantity of compressed information lengths included in the one combination, or the indication information of the sum of the compressed information lengths corresponding to the one combination, or the indication information of the quantity of compressed information lengths included in the one combination and the indication information of the sum of the compressed information lengths corresponding to the one combination, or the indication information of the at least one compressed information length corresponding to the one combination and the indication information of the quantity of compressed information lengths included in the one combination, or the indication information of the at least one compressed information length corresponding to the one combination and the indication information of the sum of the compressed information lengths corresponding to the one combination, or the indication information of the at least one compressed information length corresponding to the one combination, the indication information of the quantity of compressed information lengths included in the one combination, and the indication information of the sum of the compressed information lengths corresponding to the one combination. For example, a length of each piece of compressed information has N possible values. In this case, for the one combination, a quantity L''' of pieces of compressed information in the one combination and/or a sum B''' of lengths of pieces of compressed information in the one combination are/is determined, to determine the at least one combination that meets the condition. It may be understood that the at least one combination herein is a combination that meets the quantity L''' of pieces of compressed information and/or the sum B''' of the lengths of pieces of the compressed information. For ease of distinguishing from the foregoing at least one combination determined based on the quantity L of the pieces of compressed information and/or the sum B of the lengths of the L pieces of compressed information, the at least one combination herein may be referred to as at least one target combination. Further, a generation rule of an identifier of the at least one target combination may be predefined, may be determined by the access network device and notified to the terminal, or may be determined by the terminal and notified to the access network device, or the like. This is not limited. That the second indication information includes the indication information of the at least one compressed information length corresponding to the one combination may be specifically: The second indication information includes an identifier of one combination that is in the foregoing at least one target combination and that meets a quantity of pieces of compressed information and/or a sum of compressed information lengths. Correspondingly, when receiving the second indication information, the terminal may determine, based on the quantity of compressed information lengths included in the one combination and/or the sum of compressed information lengths corresponding to the one combination, at least one target combination that meets the length and/or quantity condition. Alternatively, further, a subset in the at least one target combination is determined as the at least one target combination based on indication information (there may be one or more pieces of indication information) of at least one compressed information length corresponding to the combination. An identifier of the at least one target combination is determined in a predefined manner, a manner in which the access network device notifies the terminal, or a manner in which the terminal notifies the access network device. A value of a specific compressed information length of the combination indicated in the second indication information, and the like are determined based on an identifier that is of a combination and that is indicated by the second indication information. It may be understood that a design of the second indication information is similar to that of the first indication information sent by the terminal to the access network device, and all designs related to the first indication information may be applied to the second indication information.

The quantity L of the pieces of compressed information is predefined; or the first indication information further includes second information, and the second information indicates the quantity L of the pieces of compressed information. Optionally, the quantity L of the pieces of compressed information may be represented by a bit of a fixed length. For example, in a single-station scenario, L is any integer from 1 to Lmax, and the quantity of pieces of compressed information may be indicated by $\lceil \log_2(Lmax) \rceil$ bits. For example, when Lmax=4, the quantity L of the pieces of compressed information may be indicated by 2 fixed bits. It may be understood that when the first indication information indicates the at least one combination, and the at least one combination is determined based on B, L does not need to be predefined, and the terminal does not need to explicitly feed back L to the access network device. In addition, the at least one combination may be predefined; or when the access network device determines and indicates a combination to the terminal, L does not need to be predefined, and the terminal does not need to explicitly feed back L to the access network device.

The sum B of the lengths of the L pieces of compressed information is predefined; or the first indication information further includes third information, and the third information indicates the sum B of the lengths of the L pieces of compressed information. Optionally, the sum B of the lengths of the L pieces of compressed information may be represented by a bit of a fixed length. For example, in consideration of overheads of uplink control information (uplink control information, UCI), the sum B of the lengths of the L pieces of compressed information does not exceed Nmax bits. For example, a value of Nmax may be 1024 bits. Therefore, a maximum of $\lceil \log_2(Nmax) \rceil$ bits are required to indicate the sum of the lengths. Further, a possible value of a sum of a length of the at least one combination indicated by the access network device to the terminal is limited, and a possible value of the sum B of the length is less than Nmax. Therefore, the sum B of the length may be indicated by fewer bits. It may be understood that when the first indication information indicates the at least one combination, and the at least one combination is determined based on L, B does not need to be predefined, and the terminal does not need to feed back B to the access network device.

In this embodiment of this application, the terminal may compress the downlink channel information by using an encoder, to determine the L pieces of compressed information. Lengths of any two pieces of compressed information in the L pieces of compressed information are the same or different. During inference or reasoning, an encoder and a decoder work in pairs. Therefore, when decompressing the L pieces of compressed information, the access network device may perform decoding by using a decoder paired with the encoder.

In a design, an encoder one-to-one corresponds to a length of compressed information output by the encoder. For example, 16 encoders are deployed on a terminal side, and lengths of compressed information output by the 16 encoders are different from each other. Therefore, the access network side may determine, based on the lengths of the received L pieces of compressed information, an encoder corresponding to a length of each piece of compressed information, and further determine a decoder corresponding to each encoder. The terminal decodes each piece of compressed information in the L pieces of compressed information by using the corresponding decoder. Optionally, the correspondence between the encoder and the compressed information length output by the encoder may be predefined, may be determined by the access network device and notified to the terminal, may be determined by the terminal and notified to the access network device, or the like. This is not limited.

In another design, there is no one-to-one correspondence between an encoder and a length of compressed information output by the encoder. For example, each of a plurality of encoders may output compressed information with a length of $B_i$. Therefore, identifiers of encoders corresponding to the L pieces of compressed information may be indicated to the access network device, so that the access network device can decompress each piece of compressed information by using a corresponding decoder. For example, the terminal may send fourth indication information to the access network device, where the fourth indication information indicates an encoder corresponding to first compressed information in the L pieces of compressed information. For example, the fourth indication information includes an identifier of the encoder corresponding to the first compressed information. The first compressed information may be one or more of the L pieces of compressed information. For example, the L pieces of compressed information may correspond to different encoders. In this case, the fourth indication information may indicate L encoders. For example, the fourth indication information includes identifiers of the L encoders. Alternatively, at least two of the L pieces of compressed information correspond to a same encoder, that is, at least two of the L pieces of compressed information are output by a same encoder. In this case, the fourth indication information may indicate X encoders. For example, the fourth indication information includes identifiers of the X encoders, where X is an integer less than L.

In a design, an identifier of an encoder included in the fourth indication information may be a global identifier of the encoder. Alternatively, for an encoder, for example, a compressed information length output by the encoder is a first length, and the terminal may determine an identifier of an encoder based on a quantity of encoders corresponding to the first length. Optionally, the identifier of the encoder determined based on the quantity of encoders corresponding to the first length may be referred to as a sub-identifier of the encoder. For example, in all encoders of the terminal, a quantity of encoders whose output lengths are the first length is $N_{model}$. In this case, the terminal needs $\lceil log_2(N_{model}) \rceil$ bits to represent one encoder. If encoders corresponding to the L pieces of compressed information are different from each other, the L pieces of compressed information may indicate L encoders, and the L encoders need to be represented by

$$L * \lceil \log_2(N_{model}) \rceil$$

bits in total. When the access network device receives the L pieces of compressed information, for one of the L pieces of compressed information, the access network device determines at least one encoder based on a length (which may be referred to as a first length) of the compressed information. A length of compressed information output by the at least one encoder is the first length. The at least one encoder is encoded in a predefined manner, a manner in which the access network device determines and notifies the terminal, or a manner in which the terminal determines and notifies the access network device, to determine an identifier of each encoder. The access network device determines one encoder in the at least one encoder based on an identifier that is of the encoder and that is indicated by the terminal. The encoder may be considered as an encoder for compressing the compressed information. The access network device selects a decoder corresponding to the encoder to decompress the compressed information.

In this embodiment of this application, the identifier of the encoder is determined based on the quantity of encoders corresponding to the first length, and compared with a solution in which the fourth indication information includes a global identifier of the encoder, a solution in which the fourth indication information includes the identifier of the encoder can reduce indication overheads of the identifier of the encoder.

In step 702, a method in a corresponding access network device side includes: The access network device receives a compressed information set and the first indication information from the terminal. It may be understood that, in step 702, the terminal sends the L pieces of compressed information and the first indication information to the access network device. When receiving the L pieces of compressed information, the access network device cannot immediately determine a quantity of pieces of compressed information. Therefore, on an access network device side, the compressed information received by the access network device is referred to as the compressed information set.

Optionally, after step 702, the method may further include:

Step 703: The access network device determines the at least one combination based on the quantity L of the pieces of compressed information and/or the sum B of the lengths of the L pieces of compressed information, where the one combination in the at least one combination includes the L compressed information lengths corresponding to the L pieces of compressed information.

Similar to a terminal side, for example, the access network device may determine the at least one combination based on a value of the quantity L of pieces of compressed information and/or a value of the sum B of the lengths of the L pieces of compressed information. At least one combination corresponding to different values of L and B may be predetermined, may be sent by the access network device to the terminal, or may be determined by the terminal according to a predetermined rule. An implementation of the predetermined rule is as follows: For example, if the value of L is equal to 2, a length of each of the two pieces of compressed information has 16 values, and lengths of the two pieces of compressed information has 256 (16×16) combinations. Further, the access network device may determine, from the 256 combinations, a combination that meets a sum of lengths is equal to B. The first information indicates one of the plurality of combinations, to indicate the L compressed information lengths, and bits occupied by the first information are determined based on a quantity of combinations included in the plurality of combinations. For example, there are three combinations that satisfy the requirement of the quantity L of pieces of compressed information and/or the sum B of the lengths of the compressed information. The access network device may determine identifiers of the three combinations in a predefined manner, a manner in which the access network device determines and notifies the terminal, or a manner in which the terminal determines and notifies the access network device. The first indication information may indicate one of the three combinations. For example, the first indication information includes the first information, and the first information includes an identifier of the indicated combination. The access network device determines, based on the identifier that is of the combination and that is included in the first information, which one of the foregoing three combinations is specifically a combination indicated by the terminal. Further, the access network device may determine the L compressed information lengths based on the indicated combination. Alternatively, the access network device may determine the at least one combination based on the quantity L of the pieces of compressed information. A manner of determining the at least one combination is similar to the manner of determining, by the terminal, the at least one combination based on the quantity L of the pieces of compressed information. For details, refer to descriptions in Example 2 above. Alternatively, a manner in which the access network device may determine the at least one combination based on the sum B of the lengths of the compressed information is similar to a manner in which the terminal determines the at least one combination based on the sum B of the lengths of the compressed information. For details, refer to descriptions in Example 3 above.

Step 704: The access network device determines, based on the one combination in the at least one combination indicated by the first indication information, the L compressed information lengths corresponding to the L pieces of compressed information included in the compressed information set.

For example, the first indication information includes the first information, and the first information indicates the one combination in the at least one combination. The access network device determines the L compressed information lengths based on the combination indicated by the first information. The access network device may determine, based on the L compressed information lengths, the L pieces of compressed information included in the compressed information set. Further, the access network device may restore or decode the L pieces of compressed information by using a decoder. Optionally, encoders corresponding to the L pieces of compressed information are the same or different, and the access network device may decode each piece of compressed information by using an encoder corresponding to each piece of compressed information. For a manner in which the terminal indicates an encoder (or a decoder) to the access network device, refer to the foregoing descriptions. Alternatively, the access network device may decompress the L pieces of compressed information or the like according to a conventional decompression algorithm. This is not limited.

The access network device decompresses the L pieces of compressed information to obtain L pieces of downlink channel information. In a single-station scenario, the access network device may perform precoding or the like on downlink signals at L layers based on the L pieces of downlink channel information. In a multi-station scenario, L access network devices collaboratively serve one terminal. Channel information between each access network device and the terminal corresponds to one piece of compressed information. The access network device or a calculation unit decodes the L pieces of compressed information to obtain corresponding downlink channel information. If a decoding operation is not performed in the access network device, the downlink channel information obtained through decoding needs to be transmitted to the access network device. The access network device precodes the downlink signal based on the corresponding downlink channel information. A multi-station multi-layer scenario is similar to a multi-station single-layer scenario. A difference lies in that each access network device transmits data of a plurality of layers to the terminal, and each piece of compressed information corresponds to a channel eigenvector of one layer of one access network device and the terminal.

In an implementation, the terminal feeds back B, L, and first information to the access network device, where the first information indicates the L compressed information lengths. B and L may be represented by bits of fixed lengths. The first information indicates one combination in a plurality of combinations, and the one combination includes the L compressed information lengths. The first information may be represented by a bit of a non-fixed length. The non-fixed length may also be described as a variable length, or the like. Further, when the quantity L of the pieces of compressed information and/or the sum B of the L compressed information lengths are/is determined, the first information may be represented by a bit of a fixed length.

In an implementation, when a possible length value of each piece of compressed information is limited, and the value of the compressed information length L and/or the sum B of the lengths of the L pieces of compressed information are/is known, an optional length combination that meets the condition is determined. A quantity of optional length combinations that meet the condition may be denoted as $N_{L,B}$, and the terminal may indicate, by $\lceil log_2(N_{L,B}) \rceil$ bits, one of the combinations that meet the condition.

In a possible implementation, because values of L and B may be represented by bits of fixed lengths, L and B may be carried in a part I (part I) of UCI. The first information may be represented by a bit of a non-fixed length. In addition, because a length of the first information is determined by L and/or B, the first information may be carried in a part II (part II) of the UCI.

Optionally, in the solution of Embodiment 1, the method may further include: The terminal determines M pieces of compressed information, where M is an integer greater than or equal to 1; and the terminal sends the M pieces of compressed information and third indication information to the access network device, where the third indication information includes fourth information, and the fourth information indicates M compressed information lengths corresponding to the M pieces of compressed information. In other words, the terminal needs to feed back a total of L+M pieces of feedback information to the access network device. According to the foregoing descriptions in FIG. 7, the terminal indicates the L compressed information lengths to the access network device. Further, the terminal may further indicate lengths of the M pieces of compressed information to the access network device. In a possible manner, a manner of indicating the M compressed information lengths may be the same as a manner of indicating the L compressed information lengths. For example, the fourth information may indicate the one combination in the at least one combination, the one combination in the at least one combination includes the M compressed information lengths or the like, and the at least one combination may be predefined, may be indicated by a base station or the terminal, or may be determined based on M. A value of M may be predefined, or the terminal may indicate a value of M to the access network device. For example, fifth indication information further includes seventh information, and the seventh information indicates the value of M. A sum of the lengths of the M pieces of compressed information may be predefined, may be indicated by the terminal to the access network device, or may be indicated by the access network device to the terminal. In another possible manner, the M compressed information lengths may be the same, for example, may be predefined, indicated by the terminal to the access network device, or indicated by the access network device to the terminal. The lengths corresponding to the M pieces of compressed information may be predefined, may be indicated by the terminal to the access network device, or indicated by the access network device to the terminal. In a case of indication, the fourth information may indicate a length corresponding to the M pieces of compressed information, may indicate a sum of the M compressed information lengths (a value of M is a predefined), or may indicate a sum of the M compressed information lengths and the value of M. It may be understood that the lengths corresponding to the M pieces of compressed information may alternatively be indicated in another possible manner, for example, according to a predefined rule or an indicated rule. This is not limited herein.

Optionally, the access network device may decompress the L pieces of compressed information according to a conventional decompression algorithm. Alternatively, the access network device may decompress the L pieces of compressed information in an AI manner. For example, at least one decoder is deployed in the access network device, and each decoder has a unique identifier. In a design, a compressed information length output by each encoder is different, that is, one encoder corresponds to a unique compressed information length. The access network device may determine, based on a length of each piece of compressed information, an encoder corresponding to the length, and further, determine a decoder corresponding to the encoder. Alternatively, in another design, compressed information lengths output by a plurality of encoders are the same, that is, the plurality of encoders correspond to one compressed information length. In this case, the access network device may receive the fourth indication information from the terminal, where the fourth indication information indicates an encoder, a decoder, a codec combination, or the like corresponding to first compressed information. For example, the fourth indication information includes an identifier of an encoder corresponding to the first compressed information. The first compressed information is one or more of the L pieces of compressed information. This is not limited. The terminal may select a corresponding decoder based on the identifier of the encoder, to decode the first compressed information. Further, a length of the first compressed information is a first length, and the identifier of the encoder corresponding to the first compressed information is determined based on an identifier of an encoder corresponding to the first length. The access network device may determine identifiers of a plurality of encoders whose output lengths are the first length, and further, determine, based on an identifier of an encoder included in the fourth indication information, the encoder specifically indicated by the fourth indication information. The access network device may select a decoder corresponding to the encoder to decode the first compressed information.

In the solution of Embodiment 1, the terminal feeds back L, B, and the L compressed information lengths to the access network device. In an optional manner, values of L and B are represented by bits of fixed lengths, and L and B are carried in the part I of the UCI. A quantity of bits required for indication of L and B does not significantly increase as an increase in the value of L and a quantity of possible values of each compressed information length, so that a length of the part I of the UCI is not excessively long. The L compressed information lengths are represented by bits of non-fixed lengths, and are carried in the part II of the UCI. The L compressed information lengths are one of the at least one combination, and the at least one combination is determined based on the value of L and/or the value of B. Therefore, when the values of B and L are determined, a quantity of bits occupied by indication information of the L compressed information lengths is fixed. The access network device may determine a length of the part II based on the values of B and L in the part I. Further, a possible value of the at least one combination is limited, so that a quantity of indication bits required for the L compressed information lengths can be reduced, and information feedback overheads can be further reduced.

[Embodiment 2]

In the solution of Embodiment 2, a first communication apparatus determines L pieces of compressed information, where the compressed information is compressed information of a downlink channel; and the first communication apparatus sends the L pieces of compressed information and fifth indication information to a second communication apparatus, where the fifth indication information indicates M compressed information lengths corresponding to M pieces of compressed information in the L pieces of compressed information, and M is an integer less than L. The first communication apparatus may be a terminal, or a chip, a circuit, or the like used in a terminal. The second communication apparatus is an access network device, a non-real-time RIC, or a chip, a circuit, or the like used in an access network device or a non-real-time RIC. Optionally, the second communication apparatus may be one or a combination of a near-real-time RIC, a CU, a DU, or an RU. The near-real-time RIC communicates with a terminal through one or a combination of the CU, the DU, or the RU.

A procedure is provided by using an example in which the first communication apparatus is a terminal and the second communication apparatus is an access network device. It may be understood that, when the second communication apparatus is a non-real-time RIC, the access network device may serve as an intermediate node between the terminal device and the non-real-time RIC. For example, the access network device may forward the received L pieces of compressed information and the received fifth indication information to the non-real-time RIC.

As shown in FIG. 9, the procedure includes the following steps.

Step 901: The terminal determines the L pieces of compressed information, where the compressed information is the compressed information of the downlink channel, and L is an integer greater than or equal to 1.

The compressed information is the compressed information of the downlink channel information. The compressed information may also be referred to as feedback information, feedback information of the downlink channel, another name, or the like. This is not limited. For details, refer to descriptions in FIG. 7. Details are not described herein again.

In an implementation, a value of L is a value of a rank (Rank). Optionally, the value of the rank is a quantity of layers at which the terminal receives downlink data. It may be understood that the downlink data may be from one or more access network devices.

In an implementation, the L pieces of compressed information may also be referred to as a CSI report, that is, the CSI report includes the L pieces of compressed information.

Step 902: The terminal sends the L pieces of compressed information and the fifth indication information to the access network device, where the fifth indication information indicates the M compressed information lengths corresponding to the M pieces of compressed information in the L pieces of compressed information, and M is an integer less than L.

In an implementation, the fifth indication information includes M information elements, the M compressed information lengths are carried in the M information elements, and the M compressed information lengths are the same or different. This is not limited. For example, if each of the M compressed information lengths has N possible length values, each compressed information length needs to be represented by $\lceil log_2(N) \rceil$ bits. For example, if a value of M is equal to 2, and each of the two compressed information lengths has 16 possible length values, one compressed information length needs to be represented by $\lceil log_2(16) \rceil = 4$ bits. For example, the fifth indication information may include two information elements. One information element is used to indicate one compressed information length, for example, the information element may carry 4 bits, and the 4 bits indicate one compressed information length. The other information element is used to indicate another compressed information length, for example, the information element may carry 4 bits, and the 4 bits indicates the another compressed information length. The M compressed information lengths may be represented by $M \times \lceil log_2(N) \rceil$ bits.

In another implementation, the fifth indication information includes one information element, the M compressed information lengths are carried in the one information element, and the M compressed information lengths are the same or different. Optionally, when the M compressed information lengths are the same, the information element may carry indication information of one compressed information length. For example, the information element includes 4-bit indication information, and the indication information indicates the one compressed information length. When the information element received by the access network device indicates one compressed information length, it is considered by default that lengths of the M pieces of compressed information are the same, and each of the lengths of the M pieces of compressed information is the compressed information length indicated by the information element.

In still another implementation, the fifth indication information includes fifth information, the fifth information indicates one combination in at least one combination, and the one combination in the at least one combination includes the M compressed information lengths corresponding to the M pieces of compressed information. The at least one combination may be predefined, may be sent by the access network device to the terminal, or may be determined by the terminal according to a predefined rule. For example, the terminal determines the at least one combination in the predefined rule. The terminal may determine the at least one combination or the like based on a quantity M of the pieces of compressed information and/or a sum of the lengths of the M pieces of compressed information. In an implementation, in addition to an identifier of the one combination, the fifth information may further include at least one of information such as the quantity M of the pieces of compressed information and the sum of the lengths of the M pieces of compressed information. A generation rule of the identifier of the at least one combination may be predefined, may be determined by the access network device and notified to the terminal, or may be determined by the terminal and notified to the access network device. This is not limited. Optionally, the at least one combination may be predefined, or may be indicated by the access network device to the terminal. For example, the terminal receives sixth indication information from the access network device, where the sixth indication information indicates the at least one combination. For a manner in which the terminal determines the at least one combination and a manner in which the fifth indication information indicates one of the at least one combination, refer to descriptions in Embodiment 1. A difference from Embodiment 1 lies in that, in Embodiment 1, each combination includes L compressed information lengths, while in Embodiment 2, each combination includes M compressed information lengths. A difference lies in that a quantity of compressed information lengths included in each combination in Embodiment 1 is different from that in Embodiment 2.

A manner of determining lengths of remaining L-M pieces of compressed information other than the lengths of the M pieces of compressed information in the L compressed information lengths may be predefined. Alternatively, the fifth indication information further includes sixth information, and the sixth information indicates the manner of determining the lengths of the L-M pieces of compressed information. The manner of determining the remaining L-M compressed information lengths includes but is not limited to: evenly dividing the remaining L-M pieces of compressed information to determine a length of each of the L-M pieces of compressed information. In this case, the lengths of the L-M pieces of compressed information are the same. For example, a manner of evenly dividing the L-M pieces of compressed information to determine each compressed information length includes but is not limited to:

$$\left\lceil \frac{B - \sum_{i=1}^{M} B_i}{L - M} \right\rceil.$$

B represents a sum of lengths of the L pieces of compressed information, $B_i$ represents a length of any one of the M pieces of compressed information, and a value of i is greater than or equal to 1 and less than or equal to M.

Alternatively, the remaining L-M pieces of compressed information, that is, $B - \sum_{i=1}^{M} B_i$, may be allocated in a predefined manner, another manner indicated by the terminal to the access network device, or the like, to determine the lengths of the L-M pieces of compressed information.

Alternatively, the terminal may indicate, to the access network device, the lengths of the L-M pieces of compressed information by using the solution in Embodiment 1. For example, the terminal sends third indication information to the access network device, where the third indication information includes fourth information, and the fourth information indicates L-M compressed information lengths corresponding to the L-M pieces of compressed information. For example, the fourth information specifically indicates the one combination in the at least one combination, and the one combination in the at least one combination includes the L-M compressed information lengths and the like. The at least one combination may be predefined, may be sent by the access network device to the terminal, or may be determined according to a predefined rule. For example, the at least one combination is determined in the predefined rule. The terminal may determine the at least one combination or the like based on the quantity L-M of the pieces of compressed information and/or a sum of the lengths of the L-M pieces of compressed information. The terminal may indicate, to the access network device through the third indication information, the sum of the lengths of the L-M pieces of compressed information, the quantity L-M of pieces of the compressed information, and the like; or the access network device may determine the quantity L-M of pieces of compressed information, the sum of the lengths of the L-M pieces of compressed information, and the like based on one or more of values of L, M, and B, the M compressed information lengths, and the like. This is not limited.

The value of M may be predefined, or the terminal may indicate the value of M to the access network device. For example, the fifth indication information further includes seventh information, and the seventh information indicates the value of M.

The quantity L of the pieces of compressed information is predefined, or the terminal indicates the quantity L of the pieces of compressed information to the access network device. For example, the fifth indication information further includes eighth information, and the eighth information indicates the quantity L of the pieces of compressed information. The sum B of the lengths of the L pieces of compressed information is predefined, or the terminal indicates the sum B of the lengths of the L pieces of compressed information to the access network device. For example, the fifth indication information further includes ninth information, and the ninth information indicates the sum B of the lengths of the L pieces of compressed information.

In a possible implementation, the fifth indication information sent by the terminal to the access network device includes the following: indication information of the M compressed information lengths, indication information of the quantity L of the pieces of compressed information (for example, the eighth information described above), indication information of the sum B of the lengths of the L pieces of compressed information (for example, the foregoing ninth information), and indication information of M (for example, the foregoing seventh information). The values of L, B, and M may be represented by bits of fixed lengths. M is an integer less than L, and M may be represented by a bit length that is the same as that of L. The values of L, B, and M may be carried in a part I of UCI. The indication information of the M compressed information lengths may be represented by a bit with a non-fixed length, and may be carried in a part II of the UCI.

On an access network device side, in step 902, the access network device receives a compressed information set and the fifth indication information from the terminal. Optionally, after step 902, the method may further include:

Step 903: The access network device determines, based on the M compressed information lengths indicated by the fifth indication information, the M compressed information lengths included in the compressed information set.

Step 904: The access network device determines the lengths of the L-M pieces of compressed information in the compressed information set.

For example, the access network device may determine the M pieces of compressed information in the compressed information set based on the M compressed information lengths. For example, the fifth indication information includes M information elements, the M compressed information lengths are carried in the M information elements, and the M compressed information lengths are the same or different. The access network device may obtain the M compressed information lengths from the M information elements included in the fifth indication information. Alternatively, the fifth indication information includes one information element, the M compressed information lengths are carried in the one information element, and the M compressed information lengths are the same or different. The access network device may obtain one compressed information length from the one information element included in the fifth indication information. In this case, it may be considered that the lengths of the M pieces of compressed information are the same, and each of the lengths of the M pieces of compressed information is the indicated length. Alternatively, the fifth indication information includes fifth information, the fifth information indicates the one combination in the at least one combination, and the one combination in the at least one combination includes the M compressed information lengths corresponding to the M pieces of compressed information. Optionally, the at least one combination may be predefined, may be sent by the access network device to the terminal, or may be determined by the access network device according to a predefined rule. It may be understood that the access network device and the terminal determine the at least one combination in a same rule. For example, the access network device may determine the at least one combination based on the quantity M of the M pieces of compressed information and/or the sum of the lengths of the M pieces of compressed information. A generation rule of an identifier of the at least one combination may be predefined, may be determined by the access network device and notified to the terminal, or may be determined by the terminal and notified to the access network device. This is not limited. The access network device determines the identifier of the at least one combination. A combination indicated by the access network device is determined based on an identifier of the combination carried in the fifth indication information. The M compressed information lengths and the like are determined based on M lengths included in the combination. The quantity M of the pieces of compressed information and/or the sum of the lengths of the M pieces of compressed information may be predefined, or may be indicated by the terminal to the access network device. For example, in addition to an identifier of a combination, the fifth information may further include information such as the quantity M of the pieces of compressed information and/or the sum of the lengths of the M pieces of compressed information.

Further, the access network device may determine the M pieces of compressed information in the compressed information set based on the M compressed information lengths. The lengths of the remaining L-M pieces of compressed information may be determined in a predefined manner, or may be indicated by the terminal to the access network device. For example, in an implementation, the access network device receives the fifth indication information from the terminal, where the fifth indication information includes the sixth information, and the sixth information indicates the manner of determining the L-M compressed information lengths. The manner of determining the remaining L-M compressed information lengths includes but is not limited to: evenly dividing the remaining L-M pieces of compressed information. For example, the lengths of the L-M pieces of compressed information are the same. For example, a manner of evenly dividing the L-M pieces of compressed information to determine each compressed information length includes but is not limited to:

$$\left\lfloor \frac{B - \sum_{i=1}^{M} B_i}{L - M} \right\rfloor.$$

B represents the sum of the lengths of the L pieces of compressed information, $B_i$ represents a length of any one of the M pieces of compressed information, and a value of i is greater than or equal to 1 and less than or equal to M.

Alternatively, the remaining L-M pieces of compressed information, that is, $B - \sum_{i=1}^{M} B_i$, may be allocated in a predefined manner, another manner indicated by the terminal to the access network device, or the like, to determine the lengths of the L-M pieces of compressed information.

Alternatively, the terminal may indicate, to the access network device, the L-M compressed information lengths by using the solution in Embodiment 1. For example, the access network device receives the third indication information from the terminal, where the third indication information includes the fourth information, and the fourth information indicates the L-M compressed information lengths. For example, the fourth information indicates the one combination in the at least one combination, and the one combination in the at least one combination includes the L-M compressed information lengths. The at least one combination may be predefined, may be sent by the access network device to the terminal, or may be determined according to a predefined rule. For example, the at least one combination is determined in the predefined rule. The access network device may determine the at least one combination based on the quantity of the L-M pieces of compressed information and/or the sum of the lengths of the L-M pieces of compressed information. In an implementation, the terminal may send the third indication information to the access network device, where the third indication information includes the sum of the lengths of the L-M pieces of compressed information and/or the quantity L-M of pieces of compressed information. Alternatively, the access network device determines a value of L-M and the sum of the lengths of the L-M pieces of compressed information based on one or more of values of L, M, and B, the M compressed information lengths, and the like. The sum of the lengths of the L-M pieces of compressed information may be represented as $B - \sum_{i=1}^{M} B_i$. Optionally, the access network device determines the identifier of the at least one combination in a predefined manner, a manner in which the terminal notifies the access network device, a manner in which the access network device notifies the terminal, or the like. The one combination in the at least one combination indicated by the terminal is determined based on the identifier of the combination included in the fourth information. The access network device determines the L-M compressed information lengths based on L-M lengths included in the combination.

Then, the access network device may determine the remaining L-M pieces of compressed information based on the L-M compressed information lengths.

In a solution in which compression and decompression are performed in an AI manner, a terminal side may compress downlink channel information by using an encoder, to obtain L pieces of compressed information. The access network device may decode the received L pieces of compressed information by using a decoder. In a design, a compressed information length output by each encoder is unique, and each encoder corresponds to one compressed information length. The access network device may determine a unique encoder based on a length of each piece of compressed information, and further, decode the corresponding compressed information by using a decoder corresponding to the encoder. Alternatively, compressed information lengths output by a plurality of encoders are the same, that is, outputs of the plurality of encoders correspond to one compressed information length. In this case, the terminal needs to feed back the identifier of the encoder to the access network device. For example, any one or more of the L pieces of compressed information may be referred to as first compressed information. The terminal sends seventh indication information to the access network device, where the seventh indication information indicates an encoder corresponding to the first compressed information, and the like. For example, the seventh indication information includes an identifier of the encoder corresponding to the first compressed information. Optionally, a length of the first compressed information is a first length, and the identifier of the encoder corresponding to the first compressed information is determined based on a quantity of encoders corresponding to the first length. The access network device may decode the first compressed information by using a decoder corresponding to the encoder indicated by the seventh indication information. For a process in which the access network device determines the decoder that decodes the L pieces of compressed information, refer to descriptions in Embodiment 1.

In a possible implementation of Embodiment 2, the terminal may feed back, to the access network device, L, B, M, and the lengths of the M pieces of compressed information. Optionally, the values of L, B, and M may be represented by bits of fixed lengths, and may be placed in the part I of the UCI. A quantity of bits required for indication of L, B, and M does not significantly increase as an increase in a value of L and a quantity of possible values of each compressed information length, so that a length of the part I of the UCI is not excessively long. The lengths of the M pieces of compressed information may be represented by bits of non-fixed lengths, and may be placed in the part II that is of the UCI and that supports variable-length. Further, when the values of L, M, and B are determined, and a possible value of each compressed information length is fixed, a quantity of bits indicating the M compressed information lengths is fixed. Therefore, the access network device may determine a length of the part II based on information carried in the part I of the UCI. In addition, the lengths of the remaining L-M pieces of compressed information may be predefined. Compared with a manner in which the terminal feeds back the L-M compressed information lengths to the access network device, this manner can reduce feedback overheads.

It may be understood that, to implement the functions in the foregoing embodiments, the terminal and the access network device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

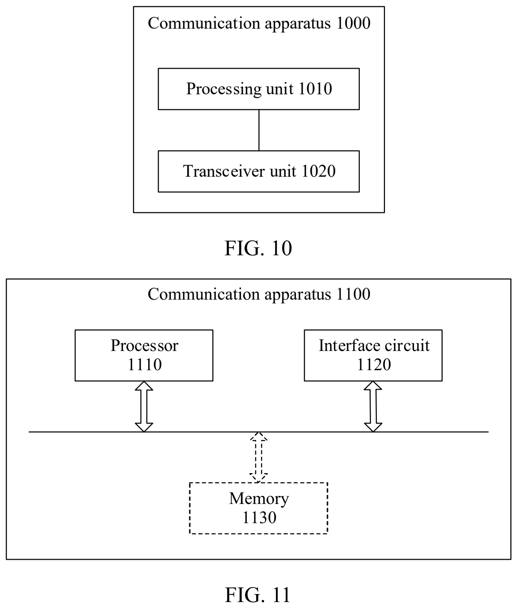

Each of FIG. 10 and FIG. 11 is a diagram of a structure of a possible communication apparatus according to an embodiment of this application. These communication apparatuses may be configured to implement one or more corresponding functions in the foregoing method embodiments, for example, functions implemented by the terminal or the access network device, to implement beneficial effect of the foregoing method embodiments.

As shown in FIG. 10, a communication apparatus 1000 includes a processing unit 1010 and a transceiver unit 1020. The communication apparatus 1000 is configured to implement one or more functions in the foregoing method embodiments, for example, a function implemented by a terminal and/or an access network device.

In an example, when the communication apparatus 1000 is configured to implement functions of the terminal in FIG. 7, the processing unit 1010 is configured to determine L pieces of compressed information, where the compressed information is compressed information of a downlink channel, and L is an integer greater than or equal to 1; and the transceiver unit 1020 is configured to send the L pieces of compressed information and first indication information to a second communication apparatus, where the first indication information includes first information, the first information indicates one combination in at least one combination, the one combination in the at least one combination includes L compressed information lengths corresponding to the L pieces of compressed information, the at least one combination is determined based on a quantity L of the pieces of compressed information and/or a sum B of lengths of the L pieces of compressed information, and B is an integer greater than 0.

In another example, when the communication apparatus 1000 is configured to implement functions of the access network device in FIG. 7, the transceiver unit 1020 is configured to receive a compressed information set and first indication information from a first communication apparatus; and the processing unit 1010 is configured to: determine at least one combination based on a quantity L of pieces of compressed information and/or a sum B of lengths of the L pieces of compressed information, where one combination in the at least one combination includes L compressed information lengths corresponding to the L pieces of compressed information, L is an integer greater than or equal to 1, and B is an integer greater than 0; and determine, based on the one combination in the at least one combination indicated by the first indication information, the L compressed information lengths corresponding to the L pieces of compressed information included in the compressed information set.

In an example, when the communication apparatus 1000 is configured to implement functions of the terminal in FIG. 9, the processing unit 1010 is configured to determine L pieces of compressed information, where the compressed information is compressed information of a downlink channel, and L is an integer greater than or equal to 1. The transceiver unit 1020 is configured to send the L pieces of compressed information and fifth indication information to a second communication apparatus, where the fifth indication information indicates M compressed information lengths corresponding to M pieces of compressed information in the L pieces of compressed information, and M is an integer less than L.

In an example, when the communication apparatus 1000 is configured to implement functions of the access network device in FIG. 9, the transceiver unit 1020 is configured to receive a compressed information set and fifth indication information that are from a first communication apparatus, where the fifth indication information indicates M compressed information lengths corresponding to M pieces of compressed information, M is an integer less than L, and L is an integer greater than or equal to 1. The processing unit 1010 is configured to determine, based on the M compressed information lengths indicated by the fifth indication information, lengths of the M pieces of compressed information included in the compressed information set.

For more detailed descriptions of the processing unit 1010 and the transceiver unit 1020, directly refer to related descriptions of FIG. 7 or FIG. 9 in the foregoing method embodiments. Details are not described herein again.

As shown in FIG. 11, a communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130, configured to store instructions executed by the processor 1110, input data required by the processor 1110 to run the instructions, or data generated after the processor 1110 runs the instructions. Optionally, the processor 1110 may be configured to implement one or more functions in the foregoing method embodiments.

Specifically, the processor 1110 may execute the instructions in the memory 1130, to enable the communication apparatus 1100 to implement one or more functions in the foregoing method embodiments, for example, a function implemented by the terminal and/or the access network device.

When the communication apparatus 1100 is configured to implement the method shown in FIG. 7 or FIG. 9, the processor 1110 is configured to implement functions of the processing unit 1010, and the interface circuit 1120 is configured to implement functions of the transceiver unit 1020.

When the communication apparatus is a terminal, or a chip used in a terminal, the terminal or the chip in the terminal may implement functions of the UE in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a base station, or a module used in a base station, the base station or the module in the base station may implement functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the communication apparatus may be an apparatus in wireless communication or a chip used in the apparatus, for example, the foregoing access network device or terminal, or may be an apparatus that undertakes one or more functions of an access network device, a terminal, or the like in another communication system such as a Wi-Fi communication system. This is not limited in this application. For example, in the Wi-Fi communication system, the apparatus that undertakes functions of the access network device may be an access node, or a chip or a circuit used in an access node, and the apparatus that undertakes functions of the terminal may be a terminal, or a chip, a circuit, or the like used in a terminal.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by using hardware or by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in a data quality measurement apparatus as discrete components.

All or some of the foregoing embodiments may be implemented by using software, hardware, firmware, or any combination thereof. When the foregoing embodiments are implemented by using software, all or some of the embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B may be singular or plural. A character "/" in text descriptions of this application usually indicates an "or" relationship between associated objects, and a character "/" in a formula in this application indicates a "division" relationship between associated objects. "Including at least one of A, B, and C" may represent: including A; including B; including C; including A and B; including A and C; including B and C; and including A, B, and C.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A compressed information feedback method, comprising:

   determining, by a first communication apparatus, L pieces of compressed information, wherein the compressed information is compressed information of a downlink channel, and L is an integer greater than or equal to 1; and
   sending, by the first communication apparatus, the L pieces of compressed information and first indication information to a second communication apparatus, wherein the first indication information comprises first information, the first information indicates one combination in at least one combination, the one combination in the at least one combination comprises L compressed information lengths corresponding to the L pieces of compressed information, the at least one combination is determined based on a quantity L of the pieces of compressed information and/or a sum B of lengths of the L pieces of compressed information, and B is an integer greater than 0.

2. The method according to claim 1, wherein a quantity of bits occupied by the first information is less than a sum of quantities of bits occupied by the L compressed information lengths in a case in which the L compressed information lengths are separately indicated.

3. The method according to claim 2, wherein when the lengths of the L pieces of compressed information are separately indicated, a quantity of bits occupied by each of the L compressed information lengths is determined based on a possible value of each compressed information length.

4. The method according to any one of claims 1 to 3, wherein a generation rule of an identifier of the at least one combination is predefined, is notified by the first communication apparatus to the second communication apparatus, or is notified by the second communication apparatus to the first communication apparatus.

5. The method according to any one of claims 1 to 4, wherein a quantity of the at least one combination is less than or equal to a quantity of all combinations that are of the L compressed information lengths and that meet the sum B of the lengths of the L pieces of compressed information.

6. The method according to any one of claims 1 to 5, wherein the at least one combination is predefined; or the first communication apparatus receives second indication information from the second communication apparatus, and the second indication information indicates the at least one combination.

7. The method according to claim 6, wherein one compressed information length comprised in one combination in the at least one combination has N possible values, the one compressed information length is represented by $\lceil log_2(N) \rceil$ bits, and the second indication information comprises at least a bit corresponding to at least one compressed information length comprised in one combination in the at least one combination, wherein N is an integer greater than 0; or
for the one combination in the at least one combination, the second indication information comprises at least one of the following: indication information of a quantity of compressed information lengths comprised in the one combination, indication information of a sum of compressed information lengths corresponding to the one combination, or indication information of at least one compressed information length corresponding to the one combination.

8. The method according to any one of claims 1 to 7, wherein the quantity L of the pieces of compressed information is predefined; or the first indication information further comprises second information, and the second information indicates the quantity L of the pieces of compressed information; and
the sum B of the lengths of the L pieces of compressed information is predefined; or the first indication information further comprises third information, and the third information indicates the sum B of the lengths of the L pieces of compressed information.

9. The method according to any one of claims 1 to 8, further comprising:

determining, by the first communication apparatus, M pieces of compressed information; and
sending, by the first communication apparatus, the M pieces of compressed information and third indication information to the second communication apparatus, wherein the third indication information comprises fourth information, the fourth information indicates M compressed information lengths corresponding to the M pieces of compressed information, and M is an integer greater than or equal to 1.

10. The method according to any one of claims 1 to 9, further comprising:
sending, by the first communication apparatus, fourth indication information to the second communication apparatus, wherein the fourth indication information indicates an encoder corresponding to first compressed information in the L pieces of compressed information.

11. The method according to claim 10, wherein the fourth indication information comprises an identifier of the encoder corresponding to the first compressed information.

12. The method according to claim 11, wherein a length of the first compressed information is a first length, and the identifier of the encoder corresponding to the first compressed information is determined based on a quantity of encoders corresponding to the first length.

13. A compressed information feedback method, comprising:

receiving, by a second communication apparatus, a compressed information set and first indication information that are from a first communication apparatus; and
determining, by the second communication apparatus, at least one combination based on a quantity L of pieces of compressed information and/or a sum B of lengths of the L pieces of compressed information, wherein one combination in the at least one combination comprises L compressed information lengths corresponding to the L pieces of compressed information, L is an integer greater than or equal to 1, and B is an integer greater than 0; and
determining, by the second communication apparatus based on the one combination in the at least one combination indicated by the first indication information, the L compressed information lengths corresponding to the L pieces of compressed information comprised in the compressed information set.

14. The method according to claim 13, wherein the first indication information comprises first information, and the first information indicates the one combination in the at least one combination.

15. The method according to claim 14, wherein when the lengths of the L pieces of compressed information are separately indicated, a quantity of bits occupied by one compressed information length in the L compressed information lengths is determined based on a possible value of the one compressed information length.

16. The method according to any one of claims 13 to 15, wherein a generation rule of an identifier of the at least one combination is predefined, is notified by the first communication apparatus to the second communication apparatus, or is notified by the second communication apparatus to the first communication apparatus.

17. The method according to any one of claims 13 to 16, wherein a quantity of the at least one combination is less than or equal to a quantity of all combinations that are of the lengths of the L pieces of compressed information and that meet the sum B of the lengths of the L pieces of compressed information.

18. The method according to any one of claims 13 to 17, wherein the at least one combination is predefined; or the second communication apparatus sends second indication information to the first communication apparatus, and the second indication information indicates the at least one combination.

19. The method according to claim 18, wherein one compressed information length comprised in the one combination in the at least one combination has N possible values, the one compressed information length is represented by $\lceil log_2(N) \rceil$ bits, and the second indication information comprises at least a bit corresponding to at least one compressed information length comprised in the one combination in the at least one combination, wherein N is an integer greater than 0; or for the one combination in the at least one combination, the second indication information comprises indication information of at least one compressed information length corresponding to the one combination.

20. The method according to any one of claims 13 to 19, wherein the quantity L of the pieces of compressed information is predefined; or the first indication information further comprises second information, and the second information indicates the quantity L of the pieces of compressed information; and the sum B of the lengths of the L pieces of compressed information is predefined; or the first indication information further comprises third information, and the third information indicates the sum B of the lengths of the L pieces of compressed information.

21. The method according to any one of claims 13 to 20, further comprising: receiving, by the second communication apparatus, M pieces of compressed information and third indication information that are from the first communication apparatus, wherein the third indication information comprises fourth information, the fourth information indicates M compressed information lengths corresponding to the M pieces of compressed information, and M is an integer greater than or equal to 1.

22. The method according to any one of claims 13 to 21, further comprising: receiving, by the second communication apparatus, fourth indication information from the first communication apparatus, wherein the fourth indication information indicates an encoder corresponding to first compressed information in the L pieces of compressed information.

23. The method according to claim 22, wherein the fourth indication information comprises an identifier of the encoder corresponding to the first compressed information.

24. The method according to claim 23, wherein a length of the first compressed information is a first length, and the identifier of the encoder corresponding to the first compressed information is determined based on a quantity of encoders corresponding to the first length.

25. A compressed information feedback method, comprising:

   determining, by a first communication apparatus, L pieces of compressed information, wherein the compressed information is compressed information of a downlink channel, and L is an integer greater than or equal to 1; and
   sending, by the first communication apparatus, the L pieces of compressed information and fifth indication information to a second communication apparatus, wherein the fifth indication information indicates M compressed information lengths corresponding to M pieces of compressed information in the L pieces of compressed information, and M is an integer less than L.

26. The method according to claim 25, wherein the fifth indication information comprises M information elements, and the M compressed information lengths are carried in the M information elements; or the fifth indication information comprises one information element, the M compressed information lengths are carried in the one information element, and lengths of the M pieces of compressed information are the same; or the fifth indication information comprises fifth information, the fifth information indicates one combination in at least one combination, and the one combination in the at least one combination comprises the M compressed information lengths corresponding to the M pieces of compressed information.

27. The method according to claim 26, wherein a generation rule of an identifier of the at least one combination is predefined, is notified by the first communication apparatus to the second communication apparatus, or is notified by the second communication apparatus to the first communication apparatus.

28. The method according to claim 26, wherein the at least one combination is predefined; or the first communication apparatus receives sixth indication information from the second communication apparatus, and the sixth indication information indicates the at least one combination.

29. The method according to any one of claims 25 to 28, wherein the fifth indication information further comprises sixth information, and the sixth information indicates a manner of determining the L-M compressed information lengths; or a manner of determining the L-M compressed information lengths is predefined.

30. The method according to any one of claims 25 to 29, wherein a value of M is predefined; or the fifth indication information further comprises seventh information, and the seventh information indicates a value of M.

31. The method according to any one of claims 25 to 30, wherein the quantity L of the pieces of compressed information is predefined; or the fifth indication information further comprises eighth information, and the eighth information indicates the quantity L of the pieces of compressed information; and a sum B of lengths of the L pieces of compressed information is predefined; or the fifth indication information further comprises ninth information, and the ninth information indicates a sum B of lengths of the L pieces of compressed information.

32. The method according to any one of claims 25 to 31, further comprising:
   sending, by the first communication apparatus, seventh indication information to the second communication apparatus, wherein the seventh indication information indicates an encoder corresponding to first compressed information in the L pieces of compressed information.

33. A compressed information feedback method, comprising:

   receiving, by a second communication apparatus, a compressed information set and fifth indication information that are from a first communication apparatus, wherein the fifth indication information indicates M compressed information lengths corresponding to M pieces of compressed information, M is an integer less than L, and L is an integer greater than or equal to 1; and

determining, by the second communication apparatus based on the M compressed information lengths indicated by the fifth indication information, lengths of the M pieces of compressed information comprised in the compressed information set.

34. The method according to claim 33, wherein the fifth indication information comprises M information elements, and the M compressed information lengths are carried in the M information elements; or the fifth indication information comprises one information element, the M compressed information lengths are carried in the one information element, and the lengths of the M pieces of compressed information are the same; or the fifth indication information comprises fifth information, the fifth information indicates one combination in at least one combination, and the one combination in the at least one combination comprises the M compressed information lengths corresponding to the M pieces of compressed information.

35. The method according to claim 34, wherein a generation rule of an identifier of the at least one combination is predefined, is notified by the first communication apparatus to the second communication apparatus, or is notified by the second communication apparatus to the first communication apparatus.

36. The method according to claim 34, wherein the at least one combination is predefined; or the second communication apparatus sends sixth indication information to the first communication apparatus, and the sixth indication information indicates the at least one combination.

37. The method according to any one of claims 33 to 36, further comprising:

determining lengths of L-M pieces of compressed information in the compressed information set, wherein a manner of determining the lengths of the L-M pieces of compressed information is predefined; or the fifth indication information further comprises sixth information, and the sixth information indicates a manner of determining the lengths of the L-M pieces of compressed information.

38. The method according to any one of claims 33 to 37, wherein a value of M is predefined; or the fifth indication information further comprises seventh information, and the seventh information indicates a value of M.

39. The method according to any one of claims 33 to 38, wherein a quantity L of pieces of compressed information is predefined; or the fifth indication information further comprises eighth information, and the eighth information indicates a quantity L of pieces of compressed information; and a sum B of lengths of the L pieces of compressed information is predefined; or the fifth indication information further comprises ninth information, and the ninth information indicates a sum B of lengths of the L pieces of compressed information.

40. The method according to any one of claims 33 to 39, further comprising:
sending, by the first communication apparatus, seventh indication information to the second communication apparatus, wherein the seventh indication information indicates an encoder corresponding to first compressed information in the L pieces of compressed information.

41. A communication apparatus, comprising a unit configured to perform the method according to any one of claims 1 to 12, or a unit configured to perform the method according to any one of claims 25 to 32.

42. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 12 or the method according to any one of claims 25 to 32 through a logic circuit or by executing code instructions.

43. A communication apparatus, comprising a processor, wherein the processor is coupled to a memory, and the processor is configured to execute a computer program or instructions stored in the memory, to enable the communication apparatus to implement the method according to any one of claims 1 to 12 or the method according to any one of claims 25 to 32.

44. A communication apparatus, comprising a unit configured to perform the method according to any one of claims 13 to 24, or a unit configured to perform the method according to any one of claims 33 to 40.

45. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 13 to 24 or the method according to any one of claims 33 to 40 through a logic circuit or by executing code instructions.

46. A communication apparatus, comprising a processor, wherein the processor is coupled to a memory, and the processor is configured to execute a computer program or instructions stored in the memory, to enable the communication apparatus to implement the method according to any one of claims 13 to 24 or the method according to any one of claims 33 to 40.

47. A computer-readable storage medium, wherein the storage medium stores a computer program or instructions, and when the computer program or the instructions are executed by a communication apparatus, the method according to any one of claims 1 to 12, the method according to any one of claims 13 to 24, the method according to any one of claims 25 to 32, or the method according to any one of claims 33 to 40 is implemented.

48. A computer program product, comprising a computer program or instructions used to perform the method according to any one of claims 1 to 12, a computer program or instructions used to perform the method according to any one of claims 13 to 24, a computer program or instructions used to perform the method according to any one of claims 25 to 32, or a computer program or instructions used to perform the method according to any one of claims 33 to 40.

49. A chip, comprising a processor, wherein the processor is configured to execute a computer program or instructions stored in a memory, to enable the chip to implement the method according to any one of claims 1 to 12, the method according to any one of claims 13 to 24, the method according to any one of claims 25 to 32, or the method according to any one of claims 33 to 40.

50. A communication system, comprising:

a first communication apparatus, configured to implement the method according to any one of claims 1 to 12, and a second communication apparatus, configured to implement the method according to any one of claims 13 to 24; or

the first communication apparatus, configured to implement the method according to any one of claims 25 to 32, and

the second communication apparatus, configured to implement the method according to any one of claims 33 to 40.

FIG. 1

FIG. 2

FIG. 3

FIG. 4

$w_0\ x_0$

Neuron

$w_1\ x_1$

$y=f(\sum_{i=0}^{n} w_i x_i + b)$

$y$

$w_\text{n}\ x_\text{n}$

FIG. 5

Neuron    Layer

Weight

Input layer

Hidden layer

Output layer

FIG. 6

Terminal

Access network device

701: The terminal determines L pieces of compressed information

702: L pieces of compressed information and first indication information, where the first indication information includes first information, the first indication information indicates one combination in at least one combination, and the one combination in the at least one combination includes L compressed information lengths corresponding to the L pieces of compressed information

703: Determine the at least one combination based on a quantity L of the pieces of compressed information and/or a sum B of lengths of the L pieces of compressed information

704: Determine, based on the one combination in the at least one combination indicated by the first indication information, the L compressed information lengths corresponding to the L pieces of compressed information included in a compressed information set

FIG. 7

FIG. 8

FIG. 9

Communication apparatus 1000

Processing unit 1010

Transceiver unit 1020

FIG. 10

Communication apparatus 1100

Processor
1110

Interface circuit
1120

Memory
1130

FIG. 11

## INTERNATIONAL SEARCH REPORT

| International application No. |
|---|
| **PCT/CN2024/085986** |

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 信道信息, 压缩, 反馈, 数量, 长度, 比特, channel information, compress, feedback, number, length, bit

### C. DOCUMENTS CONSIDERED TO BE RELEVANT

| Category* | Citation of document, with indication, where appropriate, of the relevant passages | Relevant to claim No. |
|---|---|---|
| X | CN 114867058 A (SPREADTRUM COMMUNICATIONS (SHANGHAI) CO., LTD.) 05 August 2022 (2022-08-05) description, paragraphs 39-85 | 1, 5-11, 13-14, 17-23, 33-34, 36, 38, 40-50 |
| A | CN 113556129 A (HUAWEI TECHNOLOGIES CO., LTD.) 26 October 2021 (2021-10-26) entire document | 1-50 |
| A | CN 114760654 A (BEIJING UNISOC COMMUNICATION TECHNOLOGY CO., LTD.) 15 July 2022 (2022-07-15) entire document | 1-50 |
| A | WO 2023003401 A1 (SMSU) SAMSUNG ELECTRONICS CO., LTD.26 January 2023 (2023-01-26) entire document | 1-50 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 May 2024** | **29 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085986**

| Patent document cited in search report | | | Publication date (day/month/year) | Patent family member(s) | | | Publication date (day/month/year) |
|---|---|---|---|---|---|---|---|
| CN | 114867058 | A | 05 August 2022 | WO | 2022166445 | A1 | 11 August 2022 |
| CN | 113556129 | A | 26 October 2021 | WO | 2021213186 | A1 | 28 October 2021 |
| CN | 114760654 | A | 15 July 2022 | WO | 2022148490 | A1 | 14 July 2022 |
| | | | | US | 2024063868 | A1 | 22 February 2024 |
| WO | 2023003401 | A1 | 26 January 2023 | KR | 20240036013 | A | 19 March 2024 |
| | | | | US | 2023421228 | A1 | 28 December 2023 |
| | | | | EP | 4360229 | A1 | 01 May 2024 |
| | | | | US | 2023037394 | A1 | 09 February 2023 |
| | | | | IN | 202437004539 | A | 02 February 2024 |
| | | | | CN | 117813774 | A | 02 April 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310377819